(19) Europäisches Patentamt
European Patent Office
Office européen des brevets

(11)  EP 3 264 667 B1

(12)  **EUROPEAN PATENT SPECIFICATION**

(45) Date of publication and mention
of the grant of the patent:
**06.10.2021  Bulletin 2021/40**

(51) Int Cl.:
*H04L 9/00* (2006.01)     *G09C 1/00* (2006.01)

(21) Application number: **16176717.3**

(22) Date of filing: **28.06.2016**

(54) **A METHOD FOR PROTECTING A SUBSTITUTION OPERATION AGAINST A SIDE-CHANNEL ANALYSIS**

VERFAHREN ZUM SCHUTZ EINER SUBSTITUTIONSOPERATION GEGEN EINE SEITENKANALANALYSE

PROCÉDÉ DE PROTECTION D'UNE OPÉRATION DE SUBSTITUTION CONTRE UNE ANALYSE DE CANAUX AUXILIAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018  Bulletin 2018/01**

(73) Proprietor: **ESHARD**
**33650 Martillac (FR)**

(72) Inventors:
• **WURCKER, Antoine**
**33140 Villenave d' Ornon (FR)**
• **CLAVIER, Christophe**
**87800 Rilhac Lastours (FR)**

(74) Representative: **de Roquemaurel, Bruno et al OMNIPAT**
**24 Place des Martyrs de la Résistance**
**13100 Aix en Provence (FR)**

(56) References cited:
**EP-A1- 1 601 132        US-A1- 2005 259 814**
**US-A1- 2011 055 591**

**Description**

TECHNICAL FIELD

The present invention relates to a method and device for protecting a circuit or a program against side channel analyses aiming to discover the value of a secret data handled by the circuit or program, and in particular a secret key used by an encryption or decryption algorithm to transform a message.

The present invention relates in particular to smart card integrated circuits or to hardware cryptographic components integrated onto mother boards of computers and other electronic and IT equipment (USB drives, TV decoders, game consoles, etc.) implementing a cryptographic algorithm such as AES (Advanced Encryption Standard). The present invention also relates to programs implementing such an algorithm, provided for being executed in a secure or non-secured environment.

More generally the present invention relates to circuits and software implementing an operation combining two data which are required to be kept hidden.

BACKGROUND

Circuits implementing cryptographic algorithms can comprise a central processing unit (CPU), and possibly a circuit dedicated to cryptographic computing, for example a cryptographic coprocessor. These circuits may comprise thousands of logic gates that switch differently according to the operations executed. These switching operations create short variations in current consumption, for example of a few nanoseconds, and those variations can be measured. In particular, CMOS-type integrated circuits comprise logic gates that only consume current when they switch, i.e. when a logic node changes its state to 1 or to 0. Therefore, the current consumption depends on the data handled by the central processing unit and on its various peripherals: memory, data and address buses, cryptographic coprocessor, etc.

Furthermore, certain software programs using encryption or obfuscation techniques, such as the White-box Cryptography technique, may integrate secret data in such a way that it is very difficult to determine them by reverse engineering. Certain software programs may also receive a secret data from outside through a secure communication channel.

Such circuits may be subjected to so-called side channel-analysis attacks based on observing their current consumption, or their magnetic or electromagnetic radiation. Such attacks aim to discover secret data, in particular encryption keys. Current side channel attacks implement statistical analysis methods such as SPA ("Single Power Analysis"), DPA ("Differential Power Analysis"), CPA ("Correlation Power Analysis") or EMA ("ElectroMagnetic Analysis"). The SPA analysis (ref. [1]) normally only requires the acquisition of a single current consumption trace. It aims to obtain information about the activity of the integrated circuit by observing the part of the consumption trace corresponding to a cryptographic computation, since the current trace varies according to the operations executed and the data handled. Software may also undergo such side channel attacks during their execution by a circuit.

DPA (ref. [2]) and CPA (ref. [3]) analyses enable the key of an encryption algorithm to be found by acquiring numerous circuit consumption traces and by statistically analyzing these traces to find the target information. They are based on the premise that the consumption of a CMOS-type integrated circuit varies when a bit changes from 0 to 1 in a register or on a bus, and does not vary when a bit remains equal to 0, remains equal to 1 or changes from 1 to 0 (discharge of a stray capacitance of a MOS transistor). Alternatively, it can be considered that the consumption of a CMOS-type integrated circuit varies when a bit changes from 0 to 1 or changes from 1 to 0 and does not vary when a bit remains equal to 0 or remains equal to 1. This second hypothesis enables the conventional "Hamming distance" or "Hamming weight" functions to be used in order to develop a consumption model that does not require knowledge of the structure of the integrated circuit in order to be applicable. The DPA analysis involves amplifying this consumption difference thanks to statistical processing on numerous consumption traces, aiming to highlight a measurement difference between two families of consumption traces distinguished according to formulated hypotheses.

The CPA analysis (ref. [3]) is based on a linear current consumption model and involves computing a correlation coefficient between, firstly, the consumption points measured that form the captured consumption traces and, secondly, an estimated consumption value computed from the linear consumption model and a hypothesis on the data to be discovered that is handled by the microcircuit and on the value of the encryption key.

The electromagnetic analysis (EMA) is based on the principle that an integrated circuit may send information in the form of near or far field electromagnetic radiation. Given that transistors and the wires connecting them emit electromagnetic signals when their state changes, these signals can be treated like the current consumption variation signals by an analysis such as one or other of the SPA, DPA and CPA analyses. An example of application of this analysis was made by Jean-Jacques Quisquater in 2001 (ref [4]).

Other side channel analyses exist, such as "Template analysis" (ref. [5]) and "Mutual Information Analysis" (MIA) (ref. [6]). All of the above-mentioned analyses are based on a time alignment of all the analyzed traces. In other words, all the measurements performed at a given time, for example from the time the execution of a command is activated by the circuit, must correspond to the same data handled by the algorithm.

The patent application N° FR16 51443 filed by the Applicant on February 22, 2016 discloses a method for analysing traces representative of the activity of a circuit when the latter successively executes an operation on different input data. This method comprises extracting a part of each trace, and generating a histogram from each extracted trace part, by counting an occurrence number of each possible value appearing in each of the extracted parts of these traces. Partial results of the operation are then computed by applying the operation to each input data and to each possible value of a part of a secret key involved in the operation. Then, the method identifies for each possible part value of the secret key, all the input data which provide the same partial result. For each possible part value of the secret key, the occurrence numbers in the histograms, corresponding to the identified input data and the part value of the secret key are then added. The part of the secret key can be determined by subjecting the added occurrence numbers to a statistical analysis. The statistical analysis assumes that if a value related to the secret key has leaked in the extracted parts of the traces, it can be highlighted by the added occurrence numbers.

It may be desirable to propose a protection for an integrated circuit or a software program against one or more of these side-channel analyses. To this purpose, it is known to mask a sensitive data using a random value, by combining the sensitive data with a randomly chosen mask by Exclusive OR (XOR) operations. For example, the following operation:

$$C = A \oplus B,$$

with A and B representing sensitive data, and "$\oplus$" representing the XOR operator can be protected using mask values U and V randomly chosen:

$$A' = A \oplus U,$$

$$B' = B \oplus V,$$

$$C' = A' \oplus B' = C \oplus U \oplus V,$$

Therefore the resultant data C is protected as being not directly present in the computing unit performing its computation, but it can be deduced from the masked data C' and the mask values U and V, using the following equation:

$$C = C' \oplus U \oplus V.$$

According to other known protection methods, independent operations are performed in a random order and/or dummy operations are added in order to prevent analyses requiring a temporal alignment of operations of a data processing to analyze. Such methods appears to be efficient against a first order version of the above-described analyses, but not against a second order version of some of these analyses methods combining two analyses of distinct parts of a data processing and a correlating results of these two analyses.

The patent applications US 2005/259814 and EP 1 601 132 disclose countermeasures for protecting a substitution operation involving a substitution table S, by using a masked substitution table S' wherein each entry S[x] of the substitution table is masked using a respective random number r[x] (S'[x] = S[x]⊕r[x]). The patent application US 2011/055591 discloses another countermeasure for protecting a conversion operation using a table S by transferring the table into another table T such that T[A⊕X] = S(M'⊕A)⊕Z, for all possible values of mask A, where M' is an input value masked by mask X, and Z is a randomly selected mask. However, these countermeasures does not resist to the above statistical analysis disclosed by the Applicant.

Therefore it is desirable to provide a protection method which is efficient against two-order known side-channel analyses.

SUMMARY

A method is described for executing by a circuit an operation applied to an input data comprising at least one word. The method may include: generating an input set comprising data obtained by combining by Exclusive OR "XOR" operations the input data with each of first mask parameters in a first mask set, each first mask parameter in the first mask set comprising at least one word, the words in the first mask set having a same size and forming a first word subset comprising a single word from each first mask parameter of the first mask set and a same number of occurrences of all possible values of the words; applying the operation to each data in the input set to generate an output set comprising all data resulting from the application of the operation to one of the data in the input set, and providing the output set as an output of the operation, an output data resulting from applying the operation to the input data, being obtained by applying XOR operations to any one of the data in the output set and to a respective second mask parameter in a second mask set, each second mask parameter in the second mask set comprising at least one word, the words in the second mask set having a same size and forming a second word subset comprising a single word from each second mask parameter of the second mask set and a same number of occurrences of all possible values of the words.

According to an embodiment, the first mask set is generated using a random permutation function.

According to an embodiment, the operation is a substitution operation whereby an output data is selected in an input substitution table using the input data as an index, the method comprising: using masked substitution tables generated from the input substitution table and comprising one masked substitution table for each of the first mask parameters in the first mask set; and for each first mask parameter in the first mask set, selecting one of the masked substitution table corresponding to the first mask parameter, and selecting a first data in the selected masked substitution table, using as an index a second data corresponding to the first mask parameter in the input set, the output set comprising all the first data selected in one of the masked substitution tables.

According to an embodiment, the masked substitution tables are generated by: generating the first mask set; generating a second mask set comprising a number of second mask parameters equal to the number of values in the input substitution table, each second mask parameter having a same number of occurrences in the second mask set; selecting once each mask parameter respectively in the first and second mask sets to form mask pairs, each comprising one of the first mask parameters and one of the second mask parameters; generating for each mask pair one of the masked substitution table, the generation of each of the masked substitution tables comprising: selecting each data in the input substitution table, and for each selected data: computing a masked data by applying XOR operations to the selected data and to the second mask parameter of the mask pair, computing a masked index by applying XOR operations to the first mask parameter of the mask pair and to an original index, and storing the masked data in the masked substitution table, the selected data being selected at the original index and the masked data being stored at the masked index, or the selected data being selected at the masked index and the masked data being stored at the original index.

According to an embodiment, the first and second mask parameters of each mask pair are identical, or the second mask set is deduced from the first mask set using a bijective function, combined or not with a shift function applied to ranks of the first mask parameters in the first mask set, or the second mask set is generated using a random permutation function, or the second mask set is generated so that a combination by XOR operations of each of the first mask parameters in the first mask set with a corresponding second mask parameter in the second mask set produces a third mask set comprising third mask parameters, each third mask parameter in the third mask set comprising at least one word, the words in the third mask set having a same size and forming a third word subset comprising a single word from each third mask parameter of the third mask set and a same number of occurrences of all possible values of a word having the size of the words in the third word subset.

According to an embodiment, the values in the masked substitution tables are determined in a random order and/or stored in randomly selected positions in the masked substitution tables.

According to an embodiment, the computations of the data in the output set are performed in a random order and/or stored in randomly selected positions in the output set.

According to an embodiment, the method comprises detecting in the output set a computation error by: detecting two identical data in the output set; or applying XOR operations to each data in the output set and to a corresponding mask parameter in the first or second mask set, and searching in results of the XOR operations for a data different from an expected output data; or by combining together by XOR operations all the output data in the output set, the result of the combination being equal to zero when no computation error occurred.

Embodiments may also relate to a method for encrypting or decrypting an input data according to a cryptographic algorithm comprising a substitution operation, wherein the substitution operation is performed according to the above-defined method.

According to an embodiment, the cryptographic algorithm conforms with the Advanced Encryption Standard "AES" algorithm, the method comprising: generating an input set by applying XOR operations to each word of the input data, to each mask parameter of the first mask set, and to a word of a secret key corresponding the word of the input data; performing several intermediate rounds, each comprising: applying the substitution operation to each word in the input set, computing a masked round output set by applying XOR operations to each word of a round output set, to a respective mask parameter of the first mask set and to a respective mask parameter of the second mask set, and using the masked round output set as an input set for a next round; performing a last round comprising applying the substitution operation to each word in the input set; and providing an output set in which each word is masked by a respective mask parameter of the second mask set.

According to an embodiment, the first and second mask sets are generated so that a third mask set resulting from a combination by XOR operations of each mask parameter of the first mask set with a corresponding mask parameter of the second mask set, comprises only one occurrence of all possible values of a word of the input data.

According to an embodiment, the method comprises generating a random permutation of a number of elements corresponding to a number of words in the input set, using the permutation to select the words in an input set of an operation of the cryptographic algorithm, and applying the operation to the words of the input set in an order defined by the permutation.

According to an embodiment, a new random permutation is generated: during a first round of the cryptographic algorithm, and/or at each round of the cryptographic algorithm, and/or at a last round of the cryptographic algorithm, and/or before each operation of the cryptographic algorithm.

Embodiments may also relate to a circuit comprising a processor and configured to implement the above-defined methods.

According to an embodiment, the circuit comprises one circuit performing a substitution operation, for each masked substitution table.

According to an embodiment, the circuit comprises a coprocessor.

Embodiments may also relate to a device comprising a circuit asa above-defined, arranged on a medium.

Embodiments may also relate to a computer program product loadable into a computer memory and comprising code portions which, when carried out by a computer, configure the computer to carry out the steps of the methods as above-defined.

BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 represents a conventional architecture of a secure circuit;
Figure 2 is a block diagram of a circuit protected according to one embodiment;
Figures 3 and 4 are block diagrams of data illustrating a method for protecting data, according to different embodiments;
Figure 5 is a flowchart of a method for protecting data, according to one embodiment;
Figure 6 is a block diagram of data illustrating an operation protected according to one embodiment;
Figure 7 is a flowchart of an operation protected according to one embodiment;
Figures 8A, 8B, 8C are block diagrams of substitution tables, illustrating a method for protecting a substitution table, according to various embodiments;
Figures 9 and 10 are flowcharts of a method for generating a protected substitution table, according to different embodiments;
Figure 11 is a flowchart of a substitution operation protected according to one embodiment;
Figure 12 is a block diagram of an AES encryption circuit protected according to one embodiment;
Figure 13 is a block diagram of a conventional mix column operation in the AES encryption algorithm,
Figure 14 is a block diagram of an AES mix column circuit of a protected AES encryption circuit, according to one embodiment;
Figure 15 is a flowchart of an XOR operation protected according to one embodiment;
Figure 16 represents a protected circuit, according to one embodiment.

DETAILED DESCRIPTION

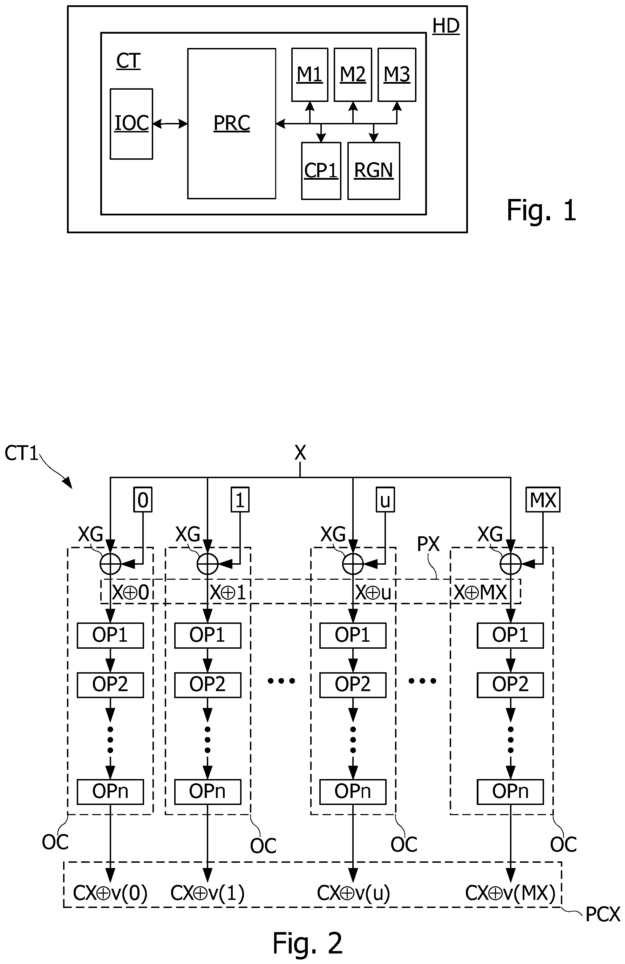

Figure 1 represents an example of a secure integrated circuit CT, for example arranged on a portable medium HD such as a plastic card or any other medium, or in a terminal such as a mobile terminal. The integrated circuit comprises a microprocessor PRC, an input/output circuit IOC, memories M1, M2, M3 coupled to the microprocessor by a data and address bus and, optionally, a cryptographic computation coprocessor CP1 or arithmetic accelerator, and a random number generator RGN. The memories can comprise a volatile memory M1, for example of RAM type ("Random Access Memory") containing volatile application data, a non-volatile memory M2, for example an EEPROM or Flash memory, containing non-volatile data and application programs, and possibly a read-only memory M3 (or ROM memory) containing the operating system of the microprocessor and constant data. The operating system can be also stored in the non-volatile memory.

The communication interface circuit IOC may be of contact type, for example according to the ISO/IEC 7816 standard, of contactless type by inductive coupling, for example according to the ISO/IEC 14443A/B or ISO/IEC 13693 standard, of contactless type by electrical coupling (UHF interface circuit), or of both contact and contactless type. The interface circuit IOC may also be coupled through a specific interface, to another circuit such as an NFC controller, or a main circuit of a terminal such as a mobile terminal or a connected object.

In some embodiments, the integrated circuit CT may be configured to execute operations of encrypting, decrypting or signing messages that are sent to it, by means of a cryptographic function. These cryptographic operations can be carried out by the processor PRC of the circuit CT or partially or totally entrusted by the processor PRC to the coprocessor CP1.

It is proposed here to protect an operation, e.g. an operation in a cryptographic algorithm against side channel analyses. In this context, the operation receives an input data, and provides an output data as a function of the value of the input data. A protection according to one embodiment involves executing the operation to be protected for all the data of an input set of data, each data in the input set comprising at least one word, the words in the input set having the same size and forming a word subset or column comprising a single word from each data in the input set and a same number of occurrences of all the possible words in relation with the size of the words. Thus the input set comprises the input data required to be processed by the operation. The result provided by the operation is an output set of data in which each data comprises at least one word, the words in the output set having the same size and forming a word subset or column comprising a single word from each data in the output set and the same number of occurrences of all the possible words in relation with the size of the words.

In the following, "word" designates a group of bits in a data, and "word column" designates a subset in a data set comprising a single word from all data in the data set, all the words in the word column having the same size. The words forming a word column are not necessary aligned, i.e. do not necessary comprises the same bit positions in the data of the data set.

Figure 2 represents a circuit CT1 receiving an input data X to be processed and serially performing several operations OP1, OP2, ... OPn applied to the input data X. According to an embodiment, the circuit CT1 comprises several circuits OC each serially performing the operations OP1, OP2, ... OPn. Each circuit OC receives the input data X and a respective input mask parameter u of an input mask parameter set. Thus the circuit CT1 comprises MX+1 circuits OC respectively receiving masks equal to 0, 1 ... MX, MX representing the greatest possible value of the mask parameter u when considering the size in bits of the mask parameter. Each circuit OC comprises a circuit XG applying Exclusive OR operations (XOR) to the input data X and to the mask parameter u (=0 or 1, ... or MX). In each circuit OC, the data $X \oplus u$ (u = 0, ... MX) provided by the circuit XG of the circuit OC is applied to an input of the operation OP1 of the circuit OC. The operations OP1-OPn are such that:

$$OPn(\ldots OP2(OP1(X \oplus u))\ldots) = CX \oplus v(u), \qquad (1)$$

where "$\oplus$" represents the XOR operator, $v(u)$ represents an output mask parameter depending on the input mask parameter u and CX is the result of the operations OP1-OPn applied to the input data X:

$$CX = OPn(\ldots OP2(OP1(X))\ldots) \qquad (2)$$

Thus each circuit OC provides an output data equal to $CX \oplus v(u)$ (u=0, 1, ..., or MX). Therefore, the circuit CT1 provides an output set PCX comprising the output data $CX \oplus v(0)$, $CX \oplus v(1)$, ... $CX \oplus v(u)$, ... $CX \oplus v(MX)$. The operations OP1-OPn can be adapted such that the output data corresponding to the input data $X \oplus u$ provided by the operations OP1-OPn is equal to $CX \oplus v(u)$ for each value of the mask parameter u (0-MX) and the set of output mask parameters $v(u)$ with u=0 to MX, comprises a same number of occurrences of all possible values when considering the size of the output masks parameters $v(u)$. Each output mask parameter $v(u)$ can be equal to the corresponding input mask parameter u. According to an embodiment, the computations of the output data in the output set PCX may be performed in a random order, and/or stored in a random order. In this way, the different values of the mask parameter u are respectively applied to the circuits OC in a random order. Thus the circuit OC of rank k in the circuit CT1 receives an input mask parameter u = U[k], U being a mask set generated by random permutation of all possible numbers between 0 and MX. In a same way, the circuit OC of rank 0 in the circuit CT1 receives a mask parameter U[0], and the circuit OC of rank MX in the circuit CT1 receives an input mask parameter U[MX].

In addition, the circuits OC are independent from each other and the computation of each of the data $CX \oplus v(u)$ of the output set PCX is independent from the computations of the other data of the output set. Therefore the operations OP1-OPn in all the circuits OC can be performed in any order, provided that the order of the operations within each circuit OC is respected.

Unlike the protections of prior art involving hiding the operation to be protected in a flood of identical operations applied to random data and thus uncorrelated from the required input data of the operation to be protected, the idea here is to execute the operation on other data not chosen randomly. Indeed, such other data are correlated with the required input data insofar as the input set formed of such other data and of the required data to be processed is such that each data in the input set comprises at least one word, the words in the input set having the same size and forming a word subset or column comprising a single word from each data in the input set and a same number of occurrences of all possible values of one word in relation the word size. The words forming a word column are not necessary aligned, i.e. do not necessary comprises the same bit positions in the data of the data set.. Since the processed input data are not randomly chosen, statistical analyses cannot extract a signal reflecting the processing of the required input data from a signal including a random part. The different mask parameters could have unpredictable positions in the mask set, but known by the circuit performing the operation.

It could be observed that if the circuit CT1 performing the operations OP1-OPn undergoes an error such as one caused by a successful fault injection, the value of at least one word of the data in the output set PX is changed. If only one word is changed, each word rank of the data in the output set does not comprise all possible values of the words, but comprises two identical words, the word having a changed value having necessary the value of another word in the same word rank in the output set. Thus such a fault injection can be detected by looking for two data in the output set having a same value. If two data are changed, the fault injection would not be detected only when the values of these two data are swapped, which has a very low probability of occurrence. Thanks to the property of the XOR operation, an error can be easily detected by combining together by XOR operations all the output data in the output set PCX, the result of this combination being equal to zero when the output set comprises at least one word column comprising all possible values of the words with a same number of occurrences. Another way to detect a fault injection is to add each word in the output set with the corresponding mask parameter by XOR operations. The results of the XOR operations should all be equal to a word of the expected output data of the operation.

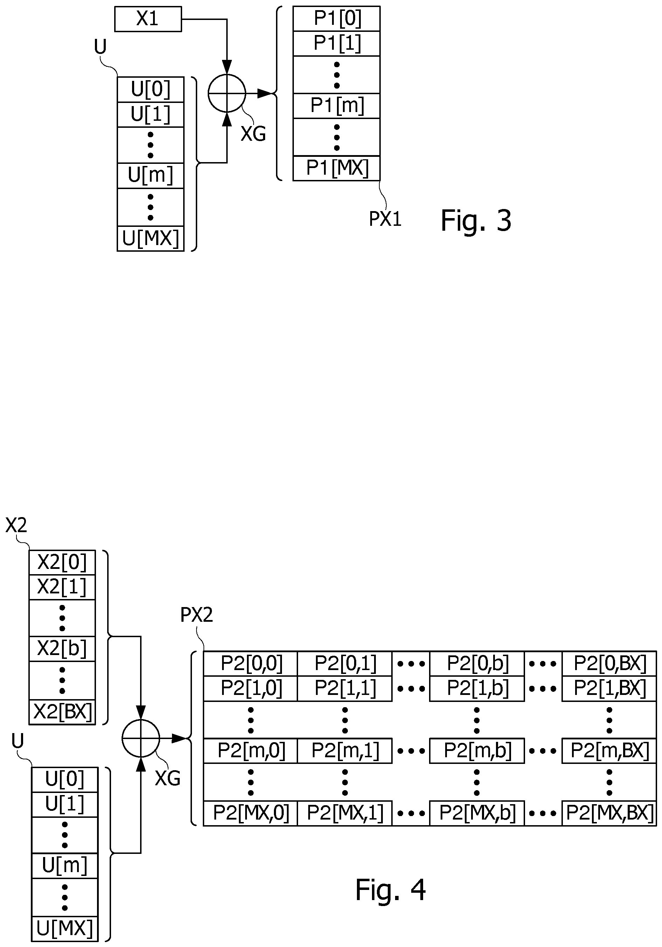

Figure 3 represents an example of the input data X1 which is combined by the operation XG of the circuits OC with a mask set U comprising mask parameters U[0..MX], MX being an index having the greatest possible value of the input data X1 taking into account the size in bit number of the data X1. The result provided by the operation XG is an output set PX1, for example arranged in a table, comprising the data P1[0], P1[1], ... P1[m], ... P1[MX], where each data P1[m] is equal to $X1 \oplus U[m]$. The data in the output set PX1 can be arranged and/or computed in a random order.

Figure 4 represents another example of an input data X2 comprising several words X2[0], X2[1], ... X2[b], ... X2[BX]. According to an embodiment, each word of the input data X2 is combined by the operation XG of the circuits OC with a respective mask parameter U[0], ... U[MX] of the mask set U, where each mask parameters U[0], ... U[MX] has the size of one word, and the index MX corresponds to the greatest possible value of one word of the input data X2 or of the mask parameters U[m], taking into account the size in bit number of each of these words. The result provided by the operation XG is an output set PX2, for example arranged in a table PX2[0..MX,0..BX] comprising data P2[m,b] = X2[b]⊕U[m], where m varies between 0 and MX and b varies between 0 and BX. The data in the output set PX2 can be arranged and/or computed in a random order.

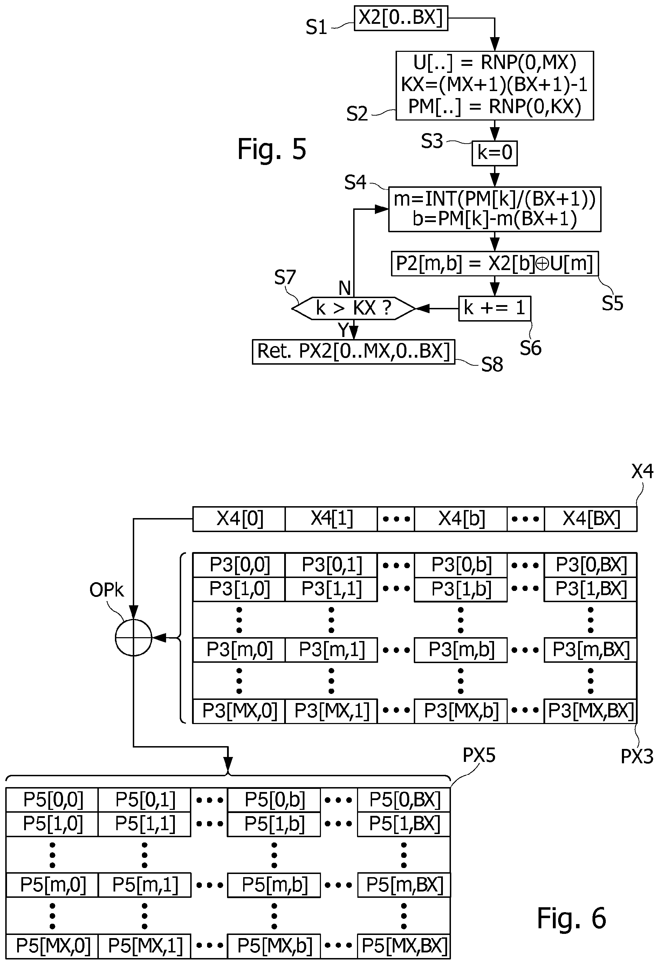

Figure 5 represents steps S1 to S8 of a procedure for generating the input set PX2 from the input data P2 comprising BX+1 words to be applied to the operation XG of the circuits OC, according to one embodiment. Steps S1 to S7 are first successively carried out. At step S1, the input data X2 is provided to the procedure. At step S2, two permutations U and PM in the form of tables are generated randomly using a random permutation generation function RNP receiving extremum values 0 and MX for the permutation U and 0 and KX for the permutation PM. The permutation U comprises MX+1 values between 0 and MX, where $MX+1 = 2^P$, P being the number of bits of each of the words X2[b] forming the input data X2. The permutation PM comprises (MX+1)(BX+1) values between 0 and the maximum value KX equal to (MX+1)(BX+1)-1. At step S3, an index k is initialized to zero (0). At step S4, indexes m and b are computed from the index k by considering that the permutation PM is a two-entry table comprising rows of BX+1 elements and columns of MX+1 elements. Thus the index m can be computed as being the integer part INT() of the division of the value PM[k] by (BX+1), and the index b can be computed as being the difference between the value PM[k] and the product of the index m by (BX+1). Step S5 computes the table elements P2 of the two-entry table PX2. Each table element P2[m,b] at indexes m and b is set to the result X2[b]⊕ U[m] of XOR operations applied to the words X2[b] and U[m]. Thanks to the use of the random permutation PM, the words P2[m,b] are computed in a random order and arranged in the table PX2 also in a random order. At step S6, the index k is incremented by one (1). At step S7, the index k is compared with the maximum value KX. If the index k is greater than the value KX, step S8 is carried out, otherwise steps S5 to S7 are again carried out for a new iteration. At step S8, the input set PX2 is completely defined and provided as output of steps S1 to S7.

The generation and use of the permutation PM can be omitted if the data in the table PX2 can be computed and/or stored in a deterministic order. In addition, the large and costly permutation PM can be replaced by two permutations of MX+1 elements and BX+1, respectively, the elements of which are read within two nested loops, one for selecting an element of a first one of the two permutations and, one for selection an element of the other one of the two permutations.

The operations OP1-OPn can comprise an operation combining the input data X1 to another data by XOR operations. Figure 6 illustrates an example of one operation OPk of the operations OP1-OPn, combining with each other data X3 and X4. The data X3 results from a previous operation among the operations XG, OP1-OPn, and thus has the form of an output set PX3 (like the output set PX2) comprising words P3[0,0], ... P3[MX,BX]. The data X4 has the same size as the data X3, and thus comprises words X4[0], ... X4[b], ..., X4[BX]. The result provided by the operation OPk is an output set PX5, for example arranged in a two-entry table, comprising the data P5[m,b], where m varies between 0 and MX and b varies between 0 and BX. Thus each output data P5[m,b] is equal to OPk(P3[m,b], X4[b]). The data in the output set PX5 can be arranged and/or computed in a random order. The operation OPk is for example an XOR operation.

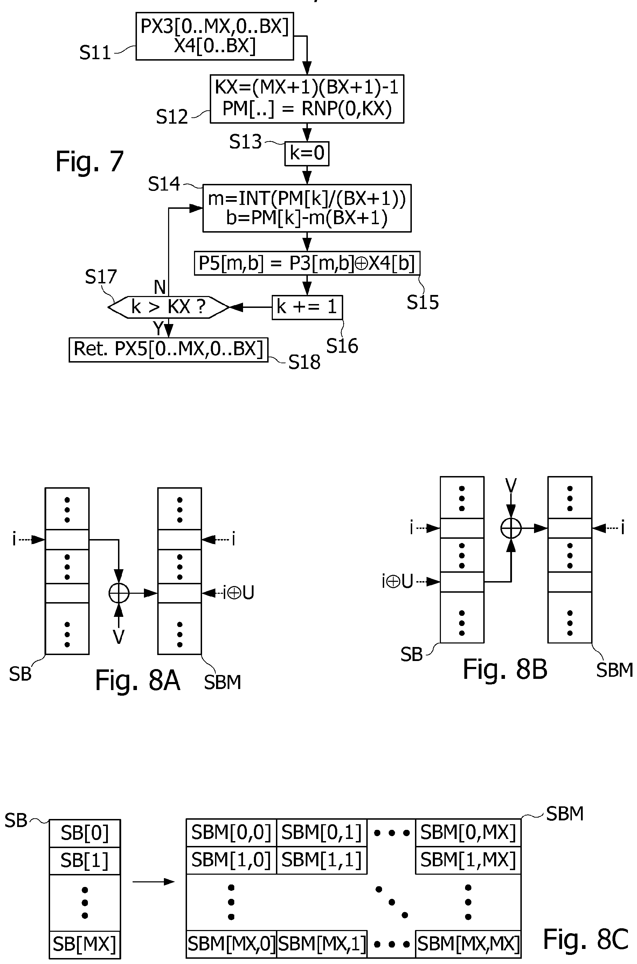

Figure 7 represents steps S11 to S18 of a procedure for generating the output set PX5 resulting from the application of an operation to the output set PX3 and the data X4, according to one embodiment. Steps S11 to S17 are first successively carried out. At step S11, the output set PX3 and the input data X4 comprising BX+1 words are input. At step S12, a permutation PM in the form of a table is randomly generated using the function RNP, the permutation PM comprising (MX+1)(BX+1) values between 0 and a maximum value KX=(MX+1)(BX+1)-1, where MX+1 = $2^P$, P being the number of bits of each of the words X4[b] forming the input data X4. At step S13, an index k is initialized to zero (0). At step S14, indexes m and b are computed from the index k by considering that the permutation PM is a two-entry table comprising rows of BX+1 elements and columns of MX+1 elements. Thus the index m can be computed as being the integer part of the division of the value PM[k] by (BX+1), and the index b can be computed as being the difference between the value PM[k] and the product of the index m by (BX+1). Step S15 computes output data P5[m,b] of the output set PX5 in the form of a two-entry table. Each output data P5[m,b] at indexes m and b is set to the result OPk(P3[m,b],X4[b]) of the operation OPk applied to the words P3[m,b] and X4[b]. Thanks to the use of the permutation PM, the output data P5[m,b] in the table PX5 are computed in a random order and arranged in the table PX5 also in a random order. At step S16, the index k is incremented by one (1). At step S17, the index k is compared with the maximum value KX. If the index k is greater than the value KX, step S18 is carried out, otherwise steps S15 to S17 are again carried out for a new iteration. At step S18, the output set PX5 is completely defined and provided as output of steps S11 to S17.

In the example of step S15 in Figure 7, the operation OPk is an XOR operation. Thus the output data P5[m,b] in the output set PX5 are equal to P3[m,b], ⊕X4[b], for each indexes m (= 0..MX), and for each index b (= 0..BX). It can be observed that each data P5[m] (of size BX+1) in the output set PX5 is the result of the operation P3[m]⊕X4 where P3[m] = X1⊕U[m]. If CX1 = X1⊕X4, then P5[m] = X1⊕X4⊕U[m] = CX1⊕U[m]. Therefore the mask U[m] applied to the input value X1 can be retained throughout the computations performed by the operations OPi in the circuits OC. The operation OPk can be any other operation than XOR, provided that this operation is performed bitwise and is reversible or bijective.

Here again, it is not necessary to compute the data in the table PX5 in a random order or to store them in a random order. In such cases, the use of the permutation PM is not mandatory.

It may be further desirable to have among the operations OPi a substitution operation using a substitution or lookup table. Such a substitution operation receives an input data, and provides an output data read in the table using the input data as an index. According to an embodiment, a masked substitution table SBM is computed using the following equation:

$$SBM[i \oplus U] = SB[i] \oplus V, \qquad\qquad (3)$$

where SB is the substitution or lookup table, i is an index for selecting a value SB[i] in the table SB and U and V are input and output masks respectively. Figure 8A represents the substitution table SB and the masked table SBM derived from the table SB by applying equation (2) to each value SB[i] in the table SB. Thus, the result of the substitution operation applied to a masked input data D⊕U is an output data masked by the known output mask V. As illustrated in Figure 8B, the masked substitution table SBM can also be obtained by applying the following equation:

$$SBM[i] = SB[i \oplus U] \oplus V, \qquad\qquad (4)$$

to each value SB[i] of the substitution table SB.

Therefore, the expected output data CX1 can be deduced from the output data provided by the circuit OC processing the masked input data X⊕ U. However the output data CX1 cannot be deduced from the output data provided by the other circuits OC since in these other circuits, the input data applied to the substitution operation is not combined with the mask parameter U used to generate the mask substitution table according to equation (3) or (4).

According to an embodiment, a masked substitution table SBM[u] is computed for each circuit OC, such that:

$$SBM[u, D \oplus u] = SB[D] \oplus v(u), \qquad\qquad (5)$$

for each value of the mask parameter u (0 ... n), where v(u) is a mask parameter corresponding to the value of the mask parameter u, such that v(u1)≠v(u2) for all mask parameters u1, u2 with u1≠u2. Therefore, each output data of the substitution operation performed by the circuits OC is equal to the output data CX masked by the mask parameter v(u) (= CX⊕ v(u)). The substitution table SB and the masked substitution table SBM are represented in Figure 8C. The substitution table SB is a single-entry table comprising MX+1 values SB[0], SB[1], ... SB[MX]. The masked substitution table SBM is a two-entry table comprising one single-entry table SBM[u] of the size of the table SB for each mask value u. Thus the masked substitution table SBM comprises MX+1 single-entry tables of the size of the table SB.

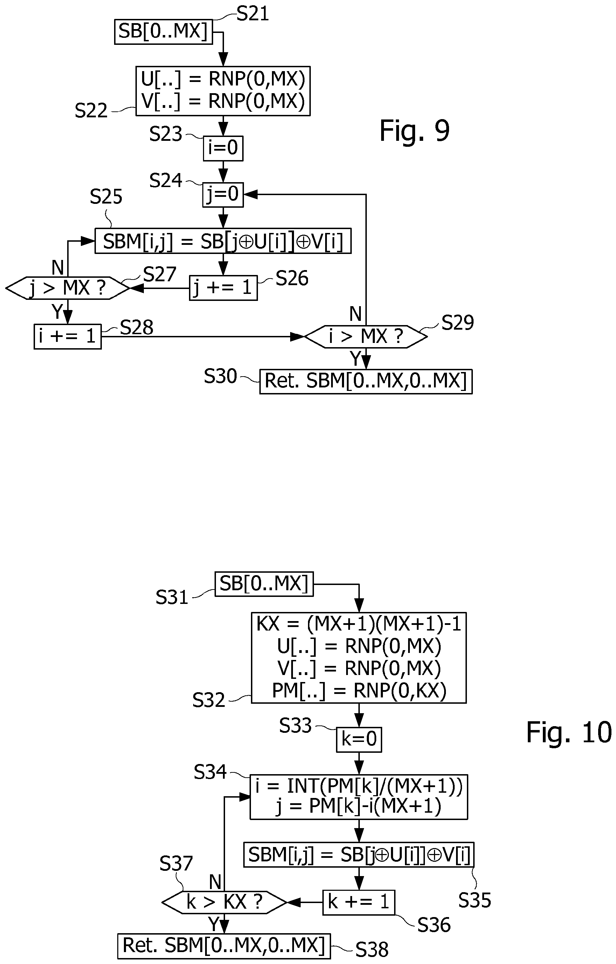

Figure 9 represents steps S21 to S30 of a procedure for computing a masked substitution table SBM from the substitution table SB, according to one embodiment. Steps S21 to S27 are first successively carried out. At step S21, the substitution table SB is input. At step S22, two permutations U and V in the form of tables are randomly generated using the function RNP. The permutations U and V comprise MX+1 values between 0 and MX, where MX+1 is the amount of values in the table SB. At steps S23 and S24, respectively, indexes i and j are initialized to zero (0). Step S25 computes the table values SBM[i,j] of the two-entry table SBM. Each table value SBM[i,j] at indexes i and j is set to the result SB[j⊕U[i]]⊕V[i] of XOR operations applied to the data SB[j⊕U[i]] and V[i]. At step S26, the index j is incremented by one (1). At step S27, the index j is compared with the maximum value MX. If the index j is greater than the value MX, step S28 is carried out, otherwise steps S25 to S27 are again carried out for a new iteration. At step S28, the index i is incremented by one (1). At step S29, the index i is compared with the maximum value MX. If the index i is greater than the value MX, step S30 is carried out, otherwise steps S24 to S27 are again carried out for a new iteration. At step S30, the masked table SBM is completely defined and provided as output of steps S21 to S29. Thus each column i of the masked table SBM corresponds to the substitution table SB masked using a particular couple of masks (U[i], V[i]).

Figure 10 represents steps S31 to S38 of a procedure for computing the masked substitution table SBM from the substitution table SB, according to another embodiment. Steps S31 to S37 are first successively carried out. At step S31, the substitution table SB is input. At step S32, three permutations U, V and PM in the form of tables are randomly generated using the function RNP. The permutations U and V comprise MX+1 values between 0 and MX, where MX+1 is the amount of values in the table SB. The permutation PM comprises (MX+1)(MX+1) values between 0 and a maximum value KX equal to (MX+1)(MX+1)-1. At step S33, an index k is initialized to zero (0). At step S34, indexes i and j are computed from the index k by considering that the permutation PM is a two-entry table comprising rows of MX+1 elements and columns of MX+1 elements. Thus the index i can be computed as being the integer part of the division of the value PM[k] by (MX+1), and the index j can be computed as being the difference between the value PM[k] and the product of the index i by (MX+1). Step S35 computes the table values SBM[i,j] randomly selected in the table SBM, using the random permutation PM. Each value SBM[i,j] at indexes i and j in the table SBM is set to the result SB[[j⊕U[i]]⊕V[i] of an XOR operation applied to the data SB[j⊕U[i]] and V[i], the mask parameters U[i] and V[i] being also randomly selected in the tables U and V since the indexes i and j are defined using the permutation PM. At step S36, the index k is incremented by one (1). At step S37, the index k is compared with the maximum value KX. If the index k is greater than the value KX, step S38 is carried out, otherwise steps S35 to S37 are again carried out for a new iteration. At step S38, the masked table SBM is completely defined and provided as output of steps S31 to S37.

It should be observed that in a process comprising the procedures of Figures 5 and 9 or 10, a single permutation U is generated and used at steps S5 and S25 or S35.

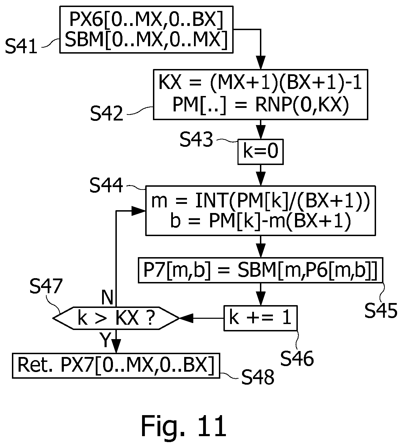

Figure 11 represents steps S41 to S48 of a procedure performing a protected substitution operation, using the masked substitution table SBM, according to one embodiment. Steps S41 to S47 are first successively carried out. At step S41 the masked substitution table SBM and a protected data in the form of an input set PX6 are input. The input set PX6 comprises words P6[0,0], ... P6[MX,BX]. At step S42, one permutation PM in the form of a table is randomly generated using the function RNP. The permutation PM comprises (MX+1)(BX+1) values between 0 and the maximum value KX equal to (MX+1)(BX+1)-1. At step S43, an index k is initialized to zero (0). At step S44, indexes m and b are computed as in step S4. Step S45 computes the output data P7[m,b] randomly selected in the output set PX7, using the random permutation PM. Each output data P7[m,b] at indexes m and b is set to the value of the element SBM[m,P6[m,b]] selected in the table SBM[m] at an index defined by the output data P6[m,b] selected in the table PX6 at indexes m and b. At step S46, the index k is incremented by one (1). At step S47, the index k is compared with the maximum value KX. If the index k is greater than the value KX, step S48 is carried out, otherwise steps S44 to S47 are again carried out for a new iteration. At step S48, the output set PX7 is completely defined and provided as output of steps S41 to S47.

According to an embodiment, the number of the possible masked substitution tables SBM obtained from a same substitution table SB, is reduced by choosing identical tables for the mask tables U and V. Thus the equations (3) and (4) become:

$$SBM[D \oplus U] = SB[D] \oplus U, \qquad (6)$$

and

$$SBM[D] = SB[D \oplus U] \oplus U, \qquad (7)$$

The operations performed at steps S25 and S35 become:

$$SBM[i,j] = SB[j \oplus U[i]] \oplus U[i] \qquad (8)$$

In this way, the number of possible masked substitution tables is reduced by a factor (MX+1), which enables all the possible masked tables to be precomputed and stored in a memory, instead of being computed and stored each time new mask tables U and V are generated.

It turns out that the generation of a random permutation has a non-negligible cost in terms of amount of required computation operations. According to one embodiment, the generation of one of the permutations U and V at steps S22, S32 is avoided by computing the values of the mask table V as a function of the values of the mask U, or inversely. For example each value V[m] of the mask table V is chosen equal to U[m]⊕K, K being a constant parameter which may be randomly chosen when the mask table U is generated. According to another example, each value V[m] is chosen equal to U[m⊕K1]⊕K2, K1, K2 being constant parameters which may be randomly chosen when the mask table U is generated. The mask table V can also be randomly generated and the mask table U determined in a same way as a function of the values in the table V.

It should be noted that in some applications the number of different values in the substitution table SB can be smaller than its number of values. Thus each value in the table SB has a same number of occurrences greater than one. In such a case, the mask table V is generated so as to comprise the same number of occurrences of the same values in the table SB.

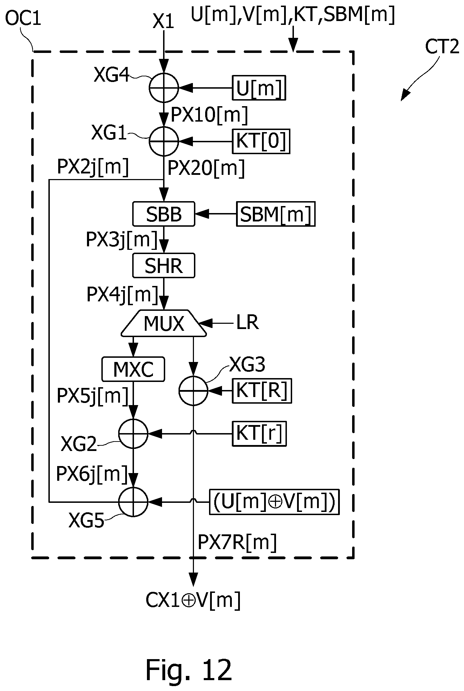

All the operations performed in the AES (Advanced Encryption Standard) algorithm either implemented by software or in hardware can be protected using the procedures previously disclosed. The architecture presented in Figure 2 can be applied to AES algorithm. Figure 12 represents a cryptographic calculation circuit OC1 as an example of the circuit OC in the Figure 2, the OC1 implementing the AES algorithm for encrypting a data. For further details about the AES, the document "Advanced Encryption Standard FIPS PUB 197" published on 26th November 2001 can be referred to. The cryptographic calculation circuit OC1 is comprised in a circuit CT2 comprising several cryptographic calculation circuits OC1, each receiving a data X1 to be processed and a mask parameter index m, and supplying a resultant data CX1 combined by XOR operations with a mask parameter V[m] corresponding to the mask parameter index m.

The circuit OC1 comprises circuits XG1, XG2, XG3 performing XOR operations, a substitute calculation circuit SBB, a row-based circular permutation calculation circuit SHR, a multiplexer MUX and a column-based permutation calculation circuit MXC. The circuits SBB, SHR, and MXC are compliant with the AES. The circuit XG1 receives both the data X1 to be encrypted and a derived key KT[0] at an index 0 in a round key table KT supplied to the circuit OC1. The output of the circuit XG1 is processed by the circuits SBB and SHR. The output of the circuit SHR is transmitted by the multiplexer MUX to the circuit MXC at rounds 0 to R-1 of the AES algorithm, and at a last round R, to the circuit XG3 receiving at another input a last derived key KT[R] at an index R in the round key table KT. At the rounds 0 to R-1, the output of the circuit MXC is processed by the circuit XG2 receiving a derived key KT[r] (r = 1, ..., R-1) read in the table KT. The output of the circuit XG2 is processed by the circuits SBB and SHR. When a certain number (R-1) of calculation rounds are performed (10, 12 or 14, in accordance with the AES) by the chain comprising the circuits SBB, SHR, MXC, XG2, the multiplexer MUX is actuated to provide the output of the circuit SHR to the input of the circuit XG3 which provides the output data CX1.

During a first calculation round, the data X1 is processed by the circuit XG1 which adds to it the first derived key KT[0] by XOR operations. The circuit XG1 provides the resulting data X1⊕K[0] which is successively processed by the circuits SBB, SHR, MXC and XG2. Then the circuit XG2 combines the data provided by the circuit MXC with a derived key KT[r] (r = 1, ..., R-1). The circuits SBB, SHR, MXC and XG2 are successively activated for several rounds of the AES algorithm. The circuits SBB, SHR and XG3 are activated at a last round R of the AES algorithm. At each round j, a round key KT[r] (r = 0, ..., R) is read in the table KT.

The substitute calculation circuit SBB is generally implemented using a substitution table receiving an input data used as an index to select an output data in the substitution table. The substitution table comprises 256 bytes, and each byte of the data to be processed by the circuit SBB is used as an index to select a byte in the substitution table.

The permutation calculation circuit SHR can be placed before the substitute calculation circuit SBB.

According to one embodiment, the circuit OC1 comprises circuits XG4 and XG5 performing XOR operations with mask parameters U[m] and U[m] $\oplus$ V[m] respectively (with m = 0, ... MX). The circuit XG4 receives the mask table U[0..MX] comprising MX+1 mask parameters having the size of one word (e.g. one byte), and the input data X1[0..BX] of BX+1 words (16 bytes, BX = 15) of the size of the mask parameters, and performs XOR operations with the mask parameters U[m] for each word of the size of the mask parameter included in the input data X1. The circuit XG4 provides to the circuit XG1 a masked input data, noted X1$\oplus$U[m] for each value of the index m. Thus, the circuit XG4 can implement the steps S1 to S8 of Figure 5, XOR operations being performed for each mask parameter U[m] in the mask table U[0..MX], a randomly selected permutation of 256 values between 0 and 255. The result provided by the circuit XG4 to the circuit XG1 is the output set PX10 having the form of the output set PX2[0..MX,0..BX] (Figures 4, 5). The operation performed by the circuits XG1, XG2 and XG3 is realized according to Figure 6, by executing the steps S11 to S18 (Figure 7). The input set of the circuit XG1 is the output set PX10 provided by the circuit XG4, and having the form of the input set PX3 in Figure 7. The input data X4 in Figure 7 is the round key KT[0,0..BX] for the circuit XG1, the round key KT[r,0..BX] (r = 1, ... R-1) for the circuit XG2, and the round key KT[R,0..BX] for the circuit XG3, each round key in the table KT comprising BX+1 bytes. The circuit XG1 provides an output set PX20[0..MX,0..BX] having the form of the output set PX5[0..MX,0..BX] (Figure 7).

The substitution table provided to the circuit SBB is the two-entry table SBM[0..MX,0..MX] generated by executing the steps of Figure 9 or 10, and obtained with the masks tables U and V, the mask table U being the same as the one input to the circuit XG4. The operation performed by the circuit SBB comprises the steps S41 to S48 as disclosed in Figure 11, in which the input set PX6 is the output set PX20 provided by the circuit XG1. The circuit SBB provides an output set PX3j (PX30 for the round 0) in the form of the output set PX7[0..MX,0..BX] (Figure 11).

The circuit SHR is designed to process separately each data PX3j[m,0..BX] (m = 0, ... MX) in the output set PX3j. The circuit SHR provides an output set PX4j[0..MX,0..BX] comprising a table PX4j[m,0..BX] for each value (0 to MX) of the index m. The circuit MXC provides an output set PX5j[0..MX,0..BX].

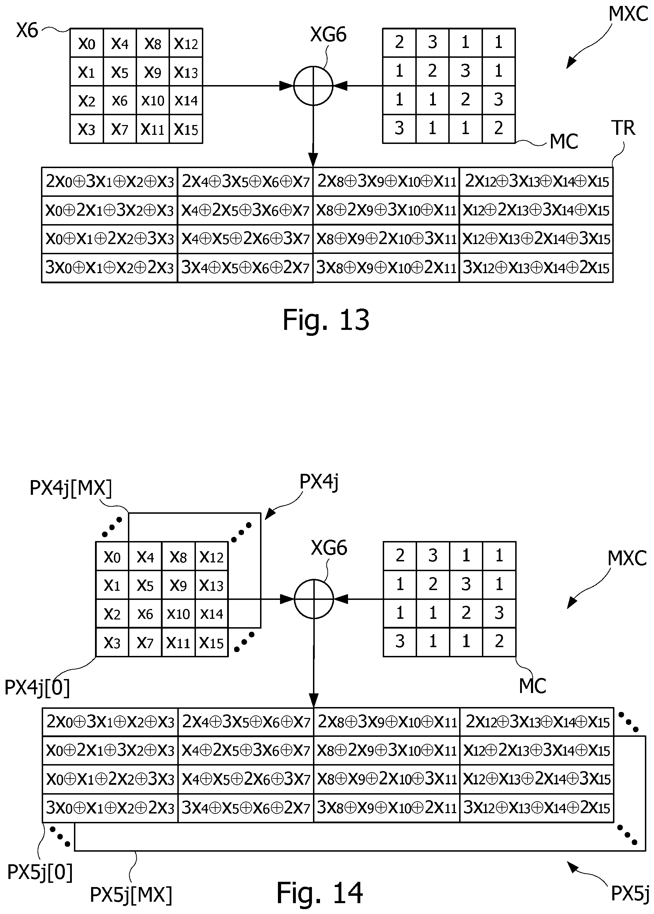

Figure 13 represents the circuit MXC. The circuit MXC combines an output data X6 of the circuit SHR with a coefficient matrix MC of 4x4 elements. To this purpose, the output data X6 is organized into a matrix format of 4x4 elements x0 to x15, each of these elements corresponding to the bytes of the data X6 which is encoded on 128 bits. The elements of the matrix X6 are combined together by XOR operation circuit XG6 with the elements of the matrix MC to produce a resultant matrix TR of 4x4 elements where each element has the following form:

$$a \cdot x<i> \oplus b \cdot x<i+1> \oplus c \cdot x<i+2> \oplus d \cdot x<i+3>, \qquad (9)$$

where a, b, c, d (= 1, 2 or 3) are the elements of one line of the matrix MC and i is equal to 0, 4, 8 and 12. According to AES, the operation 2·x is performed by using the operation LS1(x) if x is lower than 128 (when the most significant bit (MSB) of x equals 0) and the operation LS1(x)$\oplus$0x1B if x is greater or equal to 128 (when the MSB of x equals 1), LS1(x) representing a shift to the left by one bit in the byte x. The operation 3·x is performed using the operation 2·x$\oplus$x.

Since each byte b of the input data X6 is represented by one table PX4j[0..MX,b], the circuit MXC performs 3x16 XOR operations for each byte in the output set PX4j. One more XOR operations may be necessary to perform the operation 3·x. However in some implementations of AES algorithm, the operations 2·x and 3·x are implemented by lookup tables.

As illustrated in Figure 14, the XOR operations for computing an element of the matrix TR as disclosed in Figure 13 is performed within each table PX4j[m] and these operations provides a table PX5j[m] for each table PX4j[m].

Also care is to be taken with the order of the operations, when performing the operations of the circuit MXC to keep the masks on the data, since each byte x'<j> is masked by a same mask v (=V[m], x'<j> = x<j>$\oplus$v). The operations of the equation (9) are performed by applying the following property:

$$a(x \oplus v) = ax \oplus av, \text{ with } a = 2 \text{ or } 3. \qquad (10)$$

Thus:

$$A = 2x{<}0{>} \oplus 3x{<}1{>} \oplus 2v \oplus 3v \oplus x'{<}2{>} \oplus x'{<}3{>}$$

$$= 2x{<}0{>} \oplus 3x{<}1{>} \oplus 2v \oplus 2v \oplus v \oplus x'{<}2{>} \oplus x'{<}3{>}$$

$$= 2x{<}0{>} \oplus 3x{<}1{>} \oplus v \oplus x{<}2{>} \oplus v \oplus x'{<}3{>}$$

$$= 2x{<}0{>} \oplus 3x{<}1{>} \oplus x{<}2{>} \oplus x'{<}3{>} \qquad (11)$$

Therefore, at this step of the computations, the mask v is removed, which can form a leakage exploitable by a side-channel analysis to determine the data x, even if the mask v reappears when the last XOR operation is performed:

$$A = (2x{<}0{>} \oplus 3x{<}1{>} \oplus x{<}2{>} \oplus x{<}3{>}) \oplus v. \qquad (12)$$

In contrast, if the computation of element A is performed in the following order:

$$A = 2x'{<}0{>} \oplus x'{<}2{>} \oplus x'{<}3{>} \oplus 3x'{<}1{>}, \qquad (13)$$

we obtain:

$$A = 2x{<}0{>} \oplus x{<}2{>} \oplus x'{<}3{>} \oplus 3x'{<}1{>} \oplus 2v \oplus v$$

$$= 2x{<}0{>} \oplus x{<}2{>} \oplus x{<}3{>} \oplus 3x'{<}1{>} \oplus 3v \oplus v$$

$$= 2x{<}0{>} \oplus x{<}2{>} \oplus x{<}3{>} \oplus 3x'{<}1{>} \oplus 2v \oplus v \oplus v$$

$$= 2x{<}0{>} \oplus x{<}2{>} \oplus x{<}3{>} \oplus 3x{<}1{>} \oplus 2v \oplus 3v$$

$$= 2x{<}0{>} \oplus x{<}2{>} \oplus x{<}3{>} \oplus 3x{<}1{>} \oplus v. \qquad (14)$$

Therefore, when performing the XOR operations in the order of the coefficients a, b, c, d equal to (2 1 1 3), the result of each XOR operation is always masked. The orders (1 2 1 3), (3 1 1 2) and (1 3 1 2) also maintain the masking after each XOR operation. It should also be observed that the mask v applied to the input data is kept in the output data of the operation performed by the circuit MXC.

In Figure 12, The circuit XG2 provides an output set PX6j[0..MX,0..BX] having the form of the output set PX5[0..MX,0..BX] (Figure 7). The circuit XG5 is connected in series and interposed between circuits XG2 and SBB. The circuit XG5 receives the output set PX6j from the circuit XG2 and at another input the mask table W=U⊕V resulting from the combination of the tables U and V by XOR operations. Thus each value W[m] in the table W is equal to the XOR sum U[m]⊕V[m] of the values U[m] and V[m] selected at index m in the mask tables U and V. The table W can be computed as soon as the masks tables U and V are generated. By a suitable choice of the permutations U and V, each word column of the table W can comprise a same number of occurrences of all possible values of a word having the size of the words of the masks parameters U[m] and V[m].

According to an embodiment, one or several pairs (U0, V0) of mask tables U0 and V0 are stored in the circuit CT1, each pair (U0, V0) being tested as providing a table W comprising mask parameters W[m] = U0[m]⊕ V0[m]) and at least one word column comprising the same number of occurrences of all possible values of the words. The circuit CT1 is configured to derive pairs of mask tables (U2, V2) as follows:

$$U2[m] = PM(U1[m] \oplus UR)$$

$$V2[m] = PM(V1[m] \oplus VR), \text{ for each index m}, \qquad (15)$$

or

$$U2[m] = PM(U1[m]) \oplus UR$$

$$V2[m] = PM(V1[m]) \oplus VR, \text{ for each index m}, \qquad (16)$$

where UR and VR are random words of the size of any of the masks parameters U[m] or V[m], U1 and V1 are previously computed tables obtained by the equations (15) or (16), or equal to U0 and V0 respectively, and PM is a randomly selected permutation applied to the elements of the tables U1 and V1. It can be proved that each pair (U2, V2) computed using the equation (15) or (16) has the property of providing a table W comprising a word column comprising the same number of occurrences of all possible values of the words.

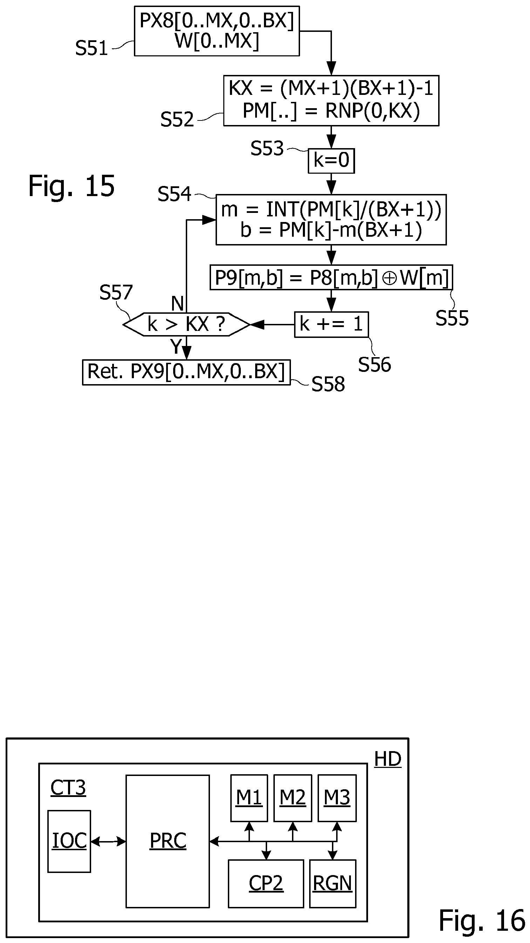

The circuit XG5 provides an output set PX2j to the circuit SBB. The circuit XG5 can implement steps S51 to S58 represented in Figure 15. The steps S51 to S58 perform application of a mask table W[0..MX] to an input set PX8[0..MX,0..BX], according to one embodiment. Steps S51 to S57 are first successively carried out. At step S51, the mask table W and a protected data having the form of the input set PX8 are input. The input set PX8 comprises words P8[0,0], ... P8[MX,BX] and the mask table comprises masks parameters W[0], ... W[MX]. At step S52, a permutation PM in the form of a table is randomly generated using the function RNP, the permutation PM comprising (MX+1)(BX+1) values between 0 and a maximum value KX=(MX+1)(BX+1)-1, where MX+1 is the number of values in the table PX8 and MX is the greatest value in this table. At step S53, an index k is initialized to zero (0). At step S54, indexes m and b are computed as in step S4. Step S55 computes the output word P9[m,b] at indexes m and b in the output set PX9 by combining by XOR operations the input word P8[m,b] at indexes m and b randomly selected in the input set PX8 with the mask parameter W[m] at index m randomly selected in the mask table W, using the random permutation PM (P9[m,b] = P8[m,b]⊕W[m]). At step S56, the index k is incremented by one (1). At step S57, the index k is compared with the maximum value KX. If the index k is greater than the value KX, step S58 is carried out, otherwise steps S54 to S57 are again carried out for a new iteration. At step S58, the output set PX9 is completely defined and provided as output of steps S51 to S57.

Therefore the output set PX2j provided by the circuit XG5 comprises words P9[m,b] masked with the mask parameters W[m] = U[m]⊕V[m] (m = 0, .. MX). Since the data in the output set PX6j are already masked with the masks parameters V[m] applied by the circuit SBB, these masks are removed by the circuit XG5. Thus the data set PX2j comprises data only masked by the mask parameters U[m], and thus the data set PX2j is ready to be further processed by the circuit SBB.

At a last round R, the circuit SBB provides an output set PX3R[0..MX,0..BX] in which each element PX3R[m,b] is masked by a mask V[m] of the mask table V. The circuit XG3 applies the round key KT[R,0..BX] to the output set PX4R according to the procedure of Figure 7, and provides an output set PX7R[0..MX,0..BX] in the form of a two-entry table in which each element at indexes m and b is equal to CX1[b]⊕V[m] and corresponds to an input data X1[b]⊕U[m] at the output of the circuit XG4. Therefore, the output data CX1[0..BX] processed by each of the circuits OC1 can be deduced from each row m (=0, ... MX) in the output set PX7R by applying the mask V[m] to the data PX7R[m,0..BX].

It should be noted that all the data processed by the processing chain comprising the circuits SBB, SHR, MXC, XG2, XG5 and XG3, are always masked by either the parameter U or the parameter V. Thus this processing chain forms a protected area in the circuit OC1. The circuit OC1 can be implemented by software with the same level of protection, since this protection depends on masking operations which can be implemented by either hardware or software without a reduction of the protection level. The circuit OC1 can be implemented either by software executed by the processor PRC or the coprocessor CP1, or by hardware for example implemented in the coprocessor CP1.

According to another embodiment, the circuit XG3 can be configured to output only the output data CX1.

According to another embodiment, the masks parameters U[m] can be added to the round key KT[0] instead of the input data X1. The mask parameters W[m] could also be added to the round keys KT[1] to KT[R-1], and the mask parameters V[m] could also be added to the round key KT[R]. Thus a transformed round key table resulting from the above computations can be precomputed from the table KT, and the circuits XG4 and XG5 can be removed from the circuit OC1. Therefore, the protection method can be implemented in a circuit performing AES encryption or decryption without having to modify the circuit.

According to another embodiment, the circuit XG5 can be omitted, and a new masked substitution table SBM generated at each round according to the procedure of Figure 10, using the mask table V as an input mask table U. Accordingly, only another output mask table V and a new permutation PM should be generated at step S32.

As an alternative of generating a permutation PM at each of the steps S12, S32, S42 and S52 in the circuit OC1, the permutation PM can be generated only once at each round performed by the circuit OC1, or only once in step S2 for the first round and at step S12 or S32 for the last round. Also in one or several of the steps S2, S12, S32, S42 and S52, the generation of the permutation PM can be replaced by the generation of two permutations, one being used for the index m or i, and the other for the index b or j.

The decryption operation according to AES algorithm comprises substantially the same operations as the encryption operation. Therefore, the previously described method for protecting a sequence of operations can be applied to protect a program or a circuit implementing the AES decryption operation. More particularly, an AES decryption circuit comprises circuits performing XOR operations with keys derived from the secret key SK, an inverse substitute calculation circuit, an inverse row-based circular permutation calculation circuit, an inverse column-based permutation calculation circuit, and the same key round table KT. The method previously disclosed can be applied to each operation performed by the decryption operation. The inverse column-based permutation calculation circuit also computes data having the following form:

$$ax<i> \oplus bx<i+1> \oplus cx<i+2> \oplus dx<i+3>,$$

where the group of coefficients (a, b, c, d) is equal to permutations of (9, 11, 13, 14). These coefficients allow the XOR operations to be computed in any order without removing the mask, and the resulting data keeps the same mask as the input data.

According to one embodiment, several words may be computed at a same time in a hardware architecture comprising wider buses than the size of the data to be processed by the operation, such as 32-bit or 64-bit since XOR operations are bitwise. In a 32-bit architecture, four bytes of the output data can be computed at the same time, and in a 64-bit architecture, eight bytes can be computed at the same time. Thus in the Figures 5, 7, 11 and 15, several iterations of the loop based on the index b can be grouped by processing several words in a same iteration. For example, in Figure 5, several or all of the computations at step S5 for b=0 to BX can be performed in a single operation by concatenating the mask value U[m] with itself several times to form a word of the size of the data P2[m,0..BX], as follows:

$$P2[m,0..BX] = X2[0..BX] \oplus U[m]//U[m]//..//U[m], \qquad (17)$$

"//" representing the concatenation operator of binary words.

In a same way, the computations performed at step S55 in Figure 15 can be performed as follows:

$$P9[m,0..BX] = P8[m,0..BX] \oplus U[m]//U[m]//..//U[m], \qquad (18)$$

Here again, it could be also observed that if the circuit CT2 performing the AES operations undergoes an error such as one caused by a successful fault injection, the value of at least one word in the output set PX6R[0..MX] is changed. If only one word is changed, a word column m of the output set no longer comprises all possible values of an output word and comprises two identical words, the changed word having necessarily the value of another word in the output set. Thus such a fault injection can be detected by looking for two words in a column m of the output set having a same value. If two words are changed in a same column of the output, the fault injection would not be detected only when the values of these two words are swapped, which has a very low probability of occurrence. Thanks to the property of the XOR operation, an error can be easily detected by combining together by XOR operations all the words in each column m of the output set, the result of this combination being equal to zero when the column m of the output set comprises all possible values of an output word with a same number of occurrences.

It should be noted that the protection method previously disclosed may be applied only to some operations performed in the AES algorithm which would be detected as vulnerable to side channel analyses. For example, the protection method can be applied only to the first and last rounds of the AES algorithm, from which sensitive data could leak, or only to the substitution operations.

More generally, the protection method previously disclosed can be applied to other encryption algorithms, implemented either by software or in hardware, and comprising XOR operations combining sensitive data, such as ARIA (ref. [7]). The ARIA algorithm processes 128-bit data divided in 16 bytes and is performed by round, each round comprising a round key addition by XOR operations, a substitution step using two precomputed substitution tables and their inverses and a diffusion step. The substitution step processes byte per byte the input data combined with the round key, and the diffusion step applies 16 different XOR combinations to the 16 bytes of the data provided by the substitution step. In each of these combinations, seven bytes of the data are added by XOR operations.

Figure 16 represents an integrated circuit CT3 arranged on a portable medium HD such as a plastic card, and implementing one of the protection methods previously described, according to one embodiment. The integrated circuit comprises the same units as the integrated circuit CT described above in connection with Figure 1, and differs from the latter in that the coprocessor CP1 is replaced with a coprocessor CP2 implementing one and/or the other protection methods described above, for example in the form of the circuit CT1 or CT2. Therefore, according to one embodiment, the coprocessor CP2 is configured to provide output set of resulting data, rather than a single data of a cryptographic operation, each output set including the expected result of the cryptographic operation, the output set being such that all data in the output set have a same number of occurrences. The processor PRC can be configured to have access to the mask table V. Thus the processor PRC can deduce the output data from the output set by combining any one of the data in the output set by one mask parameter in the mask table V, the selected data having a same rank in the output set as the mask parameter selected in the mask table V.

The coprocessor CP2 may also be configured to execute a part of the cryptographic operation. In this case, the processor PRC is configured to produce output tables of resulting data including the result of the cryptographic operation, each output table being such that all data in it have a same number of occurrences.

The methods disclosed herein may also be implemented by software programs executable by a computer system. Further, implementations may include distributed processing and parallel processing, especially for processing in parallel several or all data in the input data sets and/or for providing in parallel several or all data in the output data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive. The scope of protection is defined by the claims. Thus, the scope of the following claims is to be determined by the broadest permissible interpretation of the claims and shall not be restricted or limited by the foregoing description.

References cited

[1] P. C. Kocher, "Timing attacks on implementations of Diffie-Hellman, RSA, DSS, and other systems" In Neal Koblitz, editor, Advances in Cryptology - CRYPTO '96, volume 1109 of Lecture Notes in Computer Science, p. 104-113. Springer, 1996.

[2] P. C. Kocher, J. Jaffe, and B. Jun, "Differential Power Analysis" In M. J. Wiener, editor, Advances in Cryptology - CRYPTO '99, volume 1666 of Lecture Notes in Computer Science, p. 388-397. Springer, 1999.

[3] E. Brier, C. Clavier, and F. Olivier, "Correlation Power Analysis with a Leakage Model" In M. Joye and J-J. Quisquater, editors, Cryptographic Hardware and Embedded Systems - CHES 2004, volume 3156 of Lecture Notes in Computer Science, p. 16-29. Springer, 2004.

[4] J.-J. Quisquater, "ElectroMagnetic Analysis (EMA): Measures and Counter-measures for Smart Cards", Smart Card Programming and Security, Springer Berlin / Heidelberg, vol. 2140, 2001, p. 200-210

[5] S. Chari, J. R. Rao, and P. Rohatgi, "Template Attacks", Kaliski Jr., B.S., Koç, Ç.K., Paar, C. (eds.) CHES 2002. LNCS, vol. 2523, p. 172-186. Springer, Heidelberg (2003)

[6] B. Gierlichs, L. Batina, P. Tuyls, and B. Preneel, "Mutual Information Analysis", CHES 2008, volume 5154 of LNCS, p. 426-442, Springer, 2008

[7] Daesung Kwon et al., "New Block Cipher: ARIA", Information Security and Cryptology - ICISC 2003, Volume 2971 of the series Lecture Notes in Computer Science p. 432-445

**Claims**

1. A method for executing by a circuit (CT1) an operation (OPj) applied to an input data (X) comprising at least one word, the method comprising:

   generating an input set (PX, PX2) comprising data (P2[m]) obtained by combining by Exclusive OR "XOR" operations (⊕) the input data with each of first mask parameters in a first mask set, each first mask parameter (u, U[m]) in the first mask set (U) comprising at least one word, the words in the first mask set having a same size and forming a first word subset comprising a single word from each first mask parameter of the first mask set and a same number of occurrences of all possible values of the words;
   applying the operation to each data in the input set to generate an output set (PCX, PX7) comprising all data resulting from the application of the operation to one of the data in the input set; and
   providing the output set as an output of the operation, an output data resulting from applying the operation to the input data, being obtained by applying XOR operations to any one of the data in the output set and to a respective second mask parameter (v, V[m]) in a second mask set (V), each second mask parameter in the second mask set comprising at least one word, the words in the second mask set having a same size and forming a second word subset comprising a single word from each second mask parameter of the second mask set and a same number of occurrences of all possible values of the words.

2. The method of claim 1, wherein the first mask set (U) is generated using a random permutation function (RNP).

3. The method of claim 1 or 2, wherein the operation is a substitution operation whereby an output data is selected in an input substitution table using the input data as an index, the method comprising:

   using masked substitution tables (SBM) generated from the input substitution table and comprising one masked substitution table (SBM[m]) for each of the first mask parameters in the first mask set; and
   for each first mask parameter in the first mask set, selecting one of the masked substitution table (SBM[m]) corresponding to the first mask parameter, and selecting a first data (SBM[m,P6[m,b]]) in the selected masked substitution table, using as an index a second data (P6[m,b]) corresponding to the first mask parameter in the input set, the output set (PX7) comprising all the first data selected in one of the masked substitution tables.

4. The method of claim 3, wherein the masked substitution tables are generated by:

   generating the first mask set (U);
   generating a second mask set (V) comprising a number of second mask parameters equal to the number of values in the input substitution table (SB), each second mask parameter having a same number of occurrences in the second mask set;
   selecting once each mask parameter respectively in the first and second mask sets to form mask pairs, each comprising one of the first mask parameters and one of the second mask parameters;
   generating for each mask pair one of the masked substitution table (SBM[m]), the generation of each of the masked substitution tables comprising:
   selecting each data in the input substitution table, and for each selected data ($SB[i]$, $SB[i{\oplus}U[m]]$):

   computing a masked data ($SB[i]{\oplus}V[m]$, $SB[i{\oplus}U[m]]{\oplus}V[m]$) by applying XOR operations to the selected data and to the second mask parameter ($V[m]$) of the mask pair,
   computing a masked index ($i{\oplus}U[m]$) by applying XOR operations to the first mask parameter ($U[m]$) of the mask pair and to an original index ($i$), and
   storing the masked data in the masked substitution table, the selected data being selected at the original index and the masked data being stored at the masked index, or the selected data being selected at the masked index and the masked data being stored at the original index.

5. The method of one of claims 3 and 4, wherein:

   the first and second mask parameters ($U[m]$, $V[m]$) of each mask pair are identical, or
   the second mask set (V) is deduced from the first mask set (U) using a bijective function, combined or not with a shift function applied to ranks of the first mask parameters in the first mask set, or
   the second mask set is generated using a random permutation function, or
   the second mask set is generated so that a combination by XOR operations of each of the first mask parameters in the first mask set with a corresponding second mask parameter in the second mask set produces a third mask set comprising third mask parameters, each third mask parameter in the third mask set comprising at least one word, the words in the third mask set having a same size and forming a third word subset comprising a single word from each third mask parameter of the third mask set and a same number of occurrences of all possible values of a word having the size of the words in the third word subset.

6. The method of one of claims 3 to 5, wherein the values (SBM[m,b]) in the masked substitution tables (SBM[m]) are determined in a random order and/or stored in randomly selected positions in the masked substitution tables.

7. The method of one of claims 1 to 6, wherein the computations of the data (P7[m,b]) in the output set (PX7) are performed in a random order and/or stored in randomly selected positions in the output set.

8. The method of one of claims 1 to 7, comprising detecting in the output set (PX7) a computation error by:

   detecting two identical data in the output set; or

applying XOR operations to each data in the output set and to a corresponding mask parameter in the first or second mask set, and searching in results of the XOR operations for a data different from an expected output data; or

by combining together by XOR operations all the output data in the output set (PCX), the result of the combination being equal to zero when no computation error occurred.

9. A method for encrypting or decrypting an input data (X1) according to a cryptographic algorithm comprising a substitution operation, wherein the substitution operation is performed according to the method of one of claims 3 to 8.

10. The method of claim 9, wherein the cryptographic algorithm conforms with the Advanced Encryption Standard "AES" algorithm, the method comprising:

generating an input set (PX20[0..MX,0..BX]) by applying XOR operations (XG4, XG1) to each word (X1[b]) of the input data (X1), to each mask parameter (U[m]) of the first mask set (U), and to a word of a secret key (KT[b]) corresponding the word of the input data;

performing several intermediate rounds, each comprising:

applying the substitution operation to each word in the input set,

computing a masked round output set by applying XOR operations to each word of a round output set, to a respective mask parameter of the first mask set and to a respective mask parameter of the second mask set, and

using the masked round output set as an input set for a next round;

performing a last round comprising applying the substitution operation to each word in the input set; and

providing an output set (PX7R[0..MX,0..BX]) in which each word is masked by a respective mask parameter of the second mask set.

11. The method of claim 10, wherein the first and second mask sets (U, V) are generated so that a third mask set (W) resulting from a combination by XOR operations of each mask parameter (U[m]) of the first mask set (U) with a corresponding mask parameter (V[m]) of the second mask set (V), comprises only one occurrence of all possible values of a word of the input data (X1).

12. The method of claim 11, comprising generating a random permutation (PM) of a number of elements corresponding to a number of words in the input set (PX20), using the permutation to select the words in an input set of an operation of the cryptographic algorithm, and applying the operation to the words of the input set in an order defined by the permutation.

13. The method of claim 12, wherein a new random permutation (PM) is generated:

during a first round of the cryptographic algorithm, and/or
at each round of the cryptographic algorithm, and/or
at a last round of the cryptographic algorithm, and/or
before each operation of the cryptographic algorithm.

14. A circuit (CT1, CT2, CT3) comprising a processor (PRC) and configured to implement the method according to one of claims 1 to 13.

15. The circuit of claim 14, comprising one circuit (OC, OC1) performing a substitution operation, for each masked substitution table (SBM[m]).

16. The circuit of claim 15, comprising a coprocessor (CP1, CP2).

17. A device comprising a circuit according to claim 14 to 16, arranged on a medium (HD).

18. A computer program product loadable into a computer memory and comprising code portions which, when carried out by a computer, configure the computer to carry out the steps of the method according to one of claims 1 to 13.

**EP 3 264 667 B1**

**Patentansprüche**

1. Verfahren zum Ausführen durch eine Schaltung (CT1) eines Ablaufs (OPj), der auf eine Eingabedateneinheit (X) angewendet wird, die wenigstens ein Wort umfasst, wobei das Verfahren Folgendes umfasst:

Erzeugen eines Eingabesatzes (PX, PX2), der Daten (P2[m]) umfasst, die durch ein Kombinieren der Eingabedaten mit jedem von ersten Maskenparametern in einem ersten Maskensatz durch Exklusiv-Oder (Exclusive OR - XOR)-Abläufe ($\oplus$) erhalten werden, wobei jeder erste Maskenparameter (u, U[m]) in dem ersten Maskensatz (U) wenigstens ein Wort umfasst, wobei die Wörter in dem ersten Maskensatz eine selbe Größe aufweisen und einen ersten Wortteilsatz ausbilden, der ein einzelnes Wort aus jedem ersten Maskenparameter des ersten Maskensatzes und eine selbe Anzahl von Vorkommen aller möglichen Werte der Wörter umfasst;
Anwenden des Ablaufs auf jede Dateneinheit in dem Eingabesatz, um einen Ausgabesatz (PCX, PX7) zu erzeugen, der alle Daten umfasst, die sich aus der Anwendung des Ablaufs auf eine Einheit der Daten in dem Eingabesatz ergeben; und
Bereitstellen des Ausgabesatzes als eine Ausgabe des Ablaufs, wobei eine Ausgabedateneinheit, die sich aus dem Anwenden des Ablaufs auf die Eingabedaten ergibt, durch Anwenden von XOR-Abläufen auf eine beliebige Einheit der Daten in dem Ausgabesatz und auf einen jeweiligen zweiten Maskenparameter (v, V[m]) in einem zweiten Maskensatz (V) erhalten werden, wobei jeder zweite Maskenparameter in dem zweiten Maskensatz wenigstens ein Wort umfasst, wobei die Wörter in dem zweiten Maskensatz eine selbe Größe aufweisen und einen zweiten Wortteilsatz ausbilden, der ein einzelnes Wort aus jedem zweiten Maskenparameter des zweiten Maskensatzes und eine selbe Anzahl von Vorkommen aller möglichen Werte der Wörter umfasst.

2. Verfahren nach Anspruch 1, wobei der erste Maskensatz (U) unter Verwendung einer Zufallspermutationsfunktion (RNP) erzeugt wird.

3. Verfahren nach Anspruch 1 oder 2, wobei der Ablauf ein Substitutionsablauf ist, wodurch eine Ausgabedateneinheit in einer Eingabesubstitutionstabelle unter Verwendung der Eingabedaten als einen Index ausgewählt wird, wobei das Verfahren Folgendes umfasst:

Verwenden von maskierten Substitutionstabellen (SBM), die aus der Eingabesubstitutionstabelle erzeugt werden und eine maskierte Substitutionstabelle (SBM[m]) für jeden der ersten Maskenparameter in dem ersten Maskensatz umfassen; und
für jeden ersten Maskenparameter in dem ersten Maskensatz, Auswählen einer der maskierten Substitutionstabellen (SBM[m]), die dem ersten Maskenparameter entspricht, und Auswählen einer ersten Dateneinheit (SBM [m,P6[m,b]]) in der ausgewählten maskierten Substitutionstabelle unter Verwendung einer zweiten Dateneinheit (P6[m, b]), die dem ersten Maskenparameter in dem Eingabesatz entspricht, als einen Index, wobei der Ausgabesatz (PX7) alle ersten Daten umfasst, die in einer der maskierten Substitutionstabellen ausgewählt sind.

4. Verfahren nach Anspruch 3, wobei die maskierten Substitutionstabellen durch Folgendes erzeugt werden:

Erzeugen des ersten Maskensatzes (U);
Erzeugen eines zweiten Maskensatzes (V), der eine Anzahl von zweiten Maskenparametern gleich der Anzahl von Werten in der Eingabesubstitutionstabelle (SB) umfasst, wobei jeder zweite Maskenparameter eine selbe Anzahl von Vorkommen in dem zweiten Maskensatz aufweist;
einmaliges Auswählen jedes Maskenparameters in dem ersten beziehungsweise dem zweiten Maskensatz, um Maskenpaare auszubilden, wobei jedes einen der ersten Maskenparameter und einen der zweiten Maskenparameter umfasst;
Erzeugen einer der maskierten Substitutionstabellen (SBM[m]) für jedes Maskenpaar, wobei die Erzeugung jeder der maskierten Substitutionstabellen Folgendes umfasst:
Auswählen jeder Dateneinheit in der Eingabesubstitutionstabelle und für jede ausgewählte Dateneinheit (SB[i], SB[i $\oplus$ U[m]]):

Berechnen einer maskierten Dateneinheit (SB[i] $\oplus$ V[m], SB[i $\oplus$ U[m]] $\oplus$ V[m]) durch Anwenden von XOR-Abläufen auf die ausgewählten Daten und auf den zweiten Maskenparameter (V [m]) des Maskenpaars,
Berechnen eines maskierten Index (i $\oplus$ U[m]) durch Anwenden von XOR-Abläufen auf den ersten Maskenparameter (U[m]) des Maskenpaares und auf einen ursprünglichen Index (i), und
Speichern der maskierten Daten in der maskierten Substitutionstabelle, wobei die ausgewählten Daten an dem ursprünglichen Index ausgewählt werden und die maskierten Daten an dem maskierten Index gespeichert werden, oder die ausgewählten Daten an dem maskierten Index ausgewählt werden und die maskierten Daten an dem ursprünglichen Index gespeichert werden.

5. Verfahren nach einem der Ansprüche 3 und 4, wobei:

der erste und der zweite Maskenparameter (U[m], V[m]) jedes Maskenpaares identisch sind, oder
der zweite Maskensatz (V) unter Verwendung einer bijektiven Funktion aus dem ersten Maskensatz (U) abgeleitet wird, kombiniert oder nicht mit einer Verschiebungsfunktion, die auf Ränge der ersten Maskenparameter in dem ersten Maskensatz angewendet wird, oder
der zweite Maskensatz unter Verwendung einer Zufallspermutationsfunktion erzeugt wird, oder
der zweite Maskensatz erzeugt wird, so dass eine Kombination jedes der ersten Maskenparameter in dem ersten Maskensatz mit einem entsprechenden zweiten Maskenparameter in dem zweiten Maskensatz durch XOR-Abläufe einen dritten Maskensatz produziert, der dritte Maskenparameter umfasst, wobei jeder dritte Maskenparameter in dem dritten Maskensatz wenigstens ein Wort umfasst, wobei die Wörter in dem dritten Maskensatz eine selbe Größe aufweisen und einen dritten Wortteilsatz ausbilden, der ein einzelnes Wort aus jedem dritten Maskenparameter des dritten Maskensatzes und eine selbe Anzahl von Vorkommen aller möglichen Werte eines Worts umfasst, das die Größe der Wörter in dem dritten Wortteilsatz aufweist.

6. Verfahren nach einem der Ansprüche 3 bis 5, wobei die Werte (SBM[m,b]) in den maskierten Substitutionstabellen (SBM[m]) in einer zufälligen Reihenfolge bestimmt und/oder in zufällig ausgewählten Positionen in den maskierten Substitutionstabellen gespeichert werden.

7. Verfahren nach einem der Ansprüche 1 bis 6, wobei die Berechnungen der Daten (P7[m,b] in dem Ausgabesatz (PX7) in einer zufälligen Reihenfolge durchgeführt und/oder in zufällig ausgewählten Positionen in dem Ausgabesatz gespeichert werden.

8. Verfahren nach einem der Ansprüche 1 bis 7, das ein Erfassen eines Berechnungsfehlers in dem Ausgabesatz (PX7) durch Folgendes umfasst:

Erfassen von zwei identischen Dateneinheiten in dem Ausgabesatz; oder
Anwenden von XOR-Abläufen auf jede Dateneinheit in dem Ausgabesatz und auf einen entsprechenden Maskenparameter in dem ersten oder dem zweiten Maskensatz und Suchen in Ergebnissen der XOR-Abläufe nach einer Dateneinheit, die sich von einer erwarteten Ausgabedateneinheit unterscheidet; oder
durch miteinander Kombinieren aller Ausgabedaten in dem Ausgabesatz (PCX) durch XOR-Abläufe, wobei das Ergebnis der Kombination gleich null ist, wenn kein Rechenfehler vorgekommen ist.

9. Verfahren zum Verschlüsseln oder Entschlüsseln einer Eingabedateneinheit (X1) gemäß einem kryptografischen Algorithmus, das einen Substitutionsablauf umfasst, wobei der Substitutionsablauf gemäß dem Verfahren nach einem der Ansprüche 3 bis 8 durchgeführt wird.

10. Verfahren nach Anspruch 9, wobei der kryptografische Algorithmus mit dem Advanced-Encryption-Standard(AES)-Algorithmus übereinstimmt, wobei das Verfahren Folgendes umfasst:

Erzeugen eines Eingabesatzes (PX20[0..MX,0..BX]) durch Anwenden von XOR-Abläufen (XG4, XG1) auf jedes Wort (X1[b]) der Eingabedaten (X1), auf jeden Maskenparameter (U[m]) des ersten Maskensatzes (U) und auf ein Wort eines geheimen Schlüssels (KT[b]), das dem Wort der Eingabedaten entspricht;
Durchführen mehrerer Zwischenrunden, die jeweils Folgendes umfassen:

Anwenden des Substitutionsablaufs auf jedes Wort in dem Eingabesatz,
Berechnen eines maskierten Rundenausgabesatzes durch Anwenden von XOR-Abläufen auf jedes Wort eines Rundenausgabesatzes, auf einen jeweiligen Maskenparameter des ersten Maskensatzes und auf einen jeweiligen Maskenparameter des zweiten Maskensatzes, und
Verwenden des maskierten Rundenausgabesatzes als einen Eingabesatz für eine nächste Runde;

Durchführen einer letzten Runde, die das Anwenden des Substitutionsablaufs auf jedes Wort in dem Eingabesatz umfasst; und
Bereitstellen eines Ausgabesatzes (PX7R[0..MX,0..BX]), in dem jedes Wort durch einen jeweiligen Maskenparameter des ersten Maskensatzes maskiert wird.

11. Verfahren nach Anspruch 10, wobei der erste und der zweite Maskensatz (U, V) erzeugt werden, so dass ein dritter Maskensatz (W), der sich aus einer Kombination jedes Maskenparameters (U[m]) des ersten Maskensatzes (U) mit einem entsprechenden Maskenparameter (V[m]) des zweiten Maskensatzes (V) durch XOR-Abläufe ergibt, nur ein Vorkommen aller möglichen Werte eines Worts der Eingabedaten (X1) umfasst.

12. Verfahren nach Anspruch 11, das das Erzeugen einer Zufallspermutation (PM) einer Anzahl von Elementen, die einer Anzahl von Wörtern in dem Eingabesatz (PX20) entspricht, unter Verwendung der Permutation, um Wörter in einem Eingabesatz eines Ablaufs des kryptografischen Algorithmus auszuwählen, und das Anwenden des Ablaufs auf die Wörter des Eingabesatzes in einer durch die Permutation definierten Reihenfolge umfasst.

13. Verfahren nach Anspruch 12, wobei eine neue Zufallspermutation (PM) erzeugt wird:

während einer ersten Runde des kryptografischen Algorithmus und/oder bei jeder Runde des kryptografischen Algorithmus und/oder
bei einer letzten Runde des kryptografischen Algorithmus und/oder vor jedem Ablauf des kryptografischen Algorithmus.

14. Schaltung (CT1, CT2, CT3), die einen Prozessor (PRC) umfasst und konfiguriert ist, um das Verfahren nach einem der Ansprüche 1 bis 13 zu implementieren.

15. Schaltung nach Anspruch 14, die eine Schaltung (OC, OC1) umfasst, die einen Substitutionsablauf für jede maskierte Substitutionstabelle (SBM[m]) durchführt.

16. Schaltung nach Anspruch 15, die einen Coprozessor (CP1, CP2) umfasst.

17. Vorrichtung, die eine Schaltung nach Anspruch 14 bis 16 umfasst, die auf einem Medium (HD) angeordnet ist.

18. Computerprogrammprodukt, das in einen Computerspeicher ladbar ist und Codeabschnitte umfasst, die, wenn sie durch einen Computer vorgenommen werden, den Computer konfigurieren, um die Schritte des Verfahrens nach einem der Ansprüche 1 bis 13 vorzunehmen.

**Revendications**

1. Procédé pour exécuter, par un circuit (CT1), une opération (OPj) appliquée à une donnée d'entrée (X) comprenant au moins un mot, le procédé comprenant :

la génération d'un ensemble d'entrées (PX, PX2) comprenant des données (P2[m]) obtenues en combinant, par des opérations « XOR » fonction OU exclusif ($\oplus$), les données d'entrée avec chacun des premiers paramètres de masque dans un premier ensemble de masques, chaque premier paramètre de masque (u, U[m]) dans le premier ensemble de masques (U) comprenant au moins un mot, les mots dans le premier ensemble de masques ayant une même taille et formant un premier sous-ensemble de mots comprenant un mot unique provenant de chaque premier paramètre de masque du premier ensemble de masques et un même nombre d'occurrences de toutes les valeurs possibles des mots ;
l'application de l'opération à chaque donnée dans l'ensemble d'entrées pour générer un ensemble de sorties (PCX, PX7) comprenant toutes les données résultant de l'application de l'opération à l'une des données dans l'ensemble d'entrées ; et
la fourniture de l'ensemble de sorties en tant que sortie de l'opération, une donnée de sortie résultant de l'application de l'opération aux données d'entrée étant obtenue en appliquant des opérations XOR à l'une quelconque des données dans l'ensemble de sorties et à un deuxième paramètre de masque respectif (v, V[m]) dans un deuxième ensemble de masques (V), chaque deuxième paramètre de masque dans le deuxième ensemble de masques comprenant au moins un mot, les mots dans le deuxième ensemble de masques ayant une même taille et formant un deuxième sous-ensemble de mots comprenant un mot unique provenant de chaque deuxième paramètre de masque du deuxième ensemble de masques et un même nombre d'occurrences de toutes les valeurs possibles des mots.

**2.** Procédé selon la revendication 1, le premier ensemble de masques (U) étant généré à l'aide d'une fonction de permutation aléatoire (RNP).

**3.** Procédé selon la revendication 1 ou 2, l'opération étant une opération de substitution par laquelle une donnée de sortie est sélectionnée dans une table de substitution d'entrée à l'aide des données d'entrée en tant qu'indice, le procédé comprenant :

l'utilisation de tables de substitution masquées (SBM) générées à partir de la table de substitution d'entrées et comprenant une table de substitution masquée (SBM[m]) pour chacun des premiers paramètres de masque dans le premier ensemble de masques ; et

pour chaque premier paramètre de masque du premier ensemble de masques, la sélection de l'une des tables de substitution masquées (SBM[m]) correspondant au premier paramètre de masque et la sélection d'une première donnée (SBM[m, P6 [m, b]]) dans la table de substitution masquée sélectionnée, l'utilisation, en tant qu'indice, d'une seconde donnée (P6 [m, b]) correspondant au premier paramètre de masque dans l'ensemble d'entrées, l'ensemble de sorties (PX7) comprenant toutes les premières données sélectionnées dans l'une des tables de substitution masquées.

**4.** Procédé selon la revendication 3, les tables de substitution masquées étant générées :

par génération du premier ensemble de masques (U) ;

par génération d'un deuxième ensemble de masques (V) comprenant un nombre de deuxièmes paramètres de masque égal au nombre de valeurs dans la table de substitution d'entrée (SB), chaque deuxième paramètre de masque ayant un même nombre d'occurrences dans le deuxième ensemble de masques ;

par sélection, une fois, de chaque paramètre de masque respectivement dans les premier et deuxième ensembles de masques pour former des paires de masques, chacune comprenant l'un des premiers paramètres de masque et l'un des deuxièmes paramètres de masque ;

par génération, pour chaque paire de masques, de l'une des tables de substitution masquées (SBM[m]), la génération de chacune des tables de substitution masquées comprenant :

la sélection de chaque donnée dans la table de substitution d'entrée, et pour chaque donnée sélectionnée (SB[i], SB[i $\oplus$ U[m]]) :

le calcul d'une donnée masquée SB[i] $\oplus$ V[m], SB[i $\oplus$ U[m]] $\oplus$ V[m]) en appliquant des opérations XOR aux données sélectionnées et au deuxième paramètre de masque (V[m]) de la paire de masques,

le calcul d'un indice masqué (i $\oplus$ U[m]) en appliquant des opérations XOR au premier paramètre de masque (U[m]) de la paire de masques et à un indice d'origine (i), et

le stockage des données masquées dans la table de substitution masquée, les données sélectionnées étant sélectionnées au niveau de l'indice d'origine et les données masquées étant stockées au niveau de l'indice masqué, ou les données sélectionnées étant sélectionnées au niveau de l'indice masqué et les données masquées étant stockées au niveau de l'indice d'origine.

**5.** Procédé selon l'une des revendications 3 et 4 :

les premier et deuxième paramètres de masque (U[m], V[m]) de chaque paire de masques étant identiques, ou

le deuxième ensemble de masques (V) étant déduit à partir du premier ensemble de masques (U) à l'aide d'une fonction bijective, combinée ou non à une fonction de décalage appliquée aux rangs des premiers paramètres de masques dans le premier ensemble de masques, ou

le deuxième ensemble de masques étant généré à l'aide d'une fonction de permutation aléatoire, ou

le deuxième ensemble de masques étant généré de sorte qu'une combinaison par opérations XOR de chacun des premiers paramètres de masque dans le premier ensemble de masques avec un deuxième paramètre de masque correspondant dans le deuxième ensemble de masques produit un troisième ensemble de masques comprenant des troisièmes paramètres de masque, chaque troisième paramètre de masque dans le troisième ensemble de masques comprenant au moins un mot, les mots dans le troisième ensemble de masques ayant une même taille et formant un troisième sous-ensemble de mots comprenant un mot unique provenant de chaque troisième paramètre de masque du troisième ensemble de masques et un même nombre d'occurrences de toutes les valeurs possibles d'un mot ayant la taille des mots du troisième sous-ensemble de mots.

**6.** Procédé selon l'une des revendications 3 à 5, les valeurs (SBM[m, b]) dans les tables de substitution masquées (SBM[m]) étant déterminées dans un ordre aléatoire et/ou stockées dans des positions sélectionnées de manière aléatoire dans les tables de substitution masquées.

7. Procédé selon l'une des revendications 1 à 6, les calculs des données (P7[m, b]) dans l'ensemble de sorties (PX7) étant effectués dans un ordre aléatoire et/ou stockés dans des positions sélectionnées de manière aléatoire dans l'ensemble de sorties.

8. Procédé selon l'une des revendications 1 à 7, comprenant la détection, dans l'ensemble de sorties (PX7), d'une erreur de calcul :

   par détection de deux données identiques dans l'ensemble de sorties ; ou
   par application d'opérations XOR à chaque donnée dans l'ensemble de sorties et à un paramètre de masque correspondant dans le premier ou le deuxième ensemble de masques, et par recherche dans les résultats des opérations XOR de données différentes d'une donnée de sortie attendue ; ou
   par combinaison conjointe, par des opérations XOR, de toutes les données de sortie dans l'ensemble de sorties (PCX), le résultat de la combinaison étant égal à zéro lorsqu'aucune erreur de calcul ne s'est produite.

9. Procédé de chiffrement ou de déchiffrement de données d'entrée (X1) selon un algorithme cryptographique comprenant une opération de substitution, l'opération de substitution étant effectuée selon le procédé de l'une des revendications 3 à 8.

10. Procédé selon la revendication 9, l'algorithme cryptographique étant conforme à l'algorithme de norme de chiffrement avancé « AES », le procédé comprenant :

    la génération d'un ensemble d'entrées (PX20[0..MX, 0..BX]) en appliquant des opérations XOR (XG4, XG1) à chaque mot (X1[b]) des données d'entrée (X1), à chaque paramètre de masque (U[m]) du premier ensemble de masques (U), et à un mot d'une clé secrète (KT[b]) correspondant au mot des données d'entrée ;
    le fait d'effectuer plusieurs tours intermédiaires, chacun comprenant :

       l'application de l'opération de substitution à chaque mot de l'ensemble d'entrées,
       le calcul d'un ensemble de sorties de tour masquées en appliquant des opérations XOR à chaque mot d'un ensemble de sorties de tour, à un paramètre de masque respectif du premier ensemble de masques et à un paramètre de masque respectif du deuxième ensemble de masques, et
       l'utilisation de l'ensemble de sorties de tour masquées en tant qu'ensemble d'entrées pour un tour suivant ;

    le fait d'effectuer un dernier tour comprenant l'application de l'opération de substitution à chaque mot dans l'ensemble d'entrées ; et
    la fourniture d'un ensemble de sorties (PX7R[0..MX, 0..BX]) dans lequel chaque mot est masqué par un paramètre de masque respectif du deuxième ensemble de masques.

11. Procédé selon la revendication 10, les premier et deuxième ensembles de masques (U, V) étant générés de sorte qu'un troisième ensemble de masques W), résultant d'une combinaison par opérations XOR de chaque paramètre de masque (U[m]) du premier ensemble de masques (U) avec un paramètre de masque correspondant (V[m]) du deuxième ensemble de masques (V), comprend une seule occurrence de toutes les valeurs possibles d'un mot des données d'entrée (X1).

12. Procédé selon la revendication 11, comprenant la génération d'une permutation aléatoire (PM) d'un certain nombre d'éléments correspondant à un certain nombre de mots dans l'ensemble d'entrées (PX20), l'utilisation de la permutation pour sélectionner les mots dans un ensemble d'entrées d'une opération de l'algorithme cryptographique, et l'application de l'opération aux mots de l'ensemble d'entrées dans un ordre défini par la permutation.

13. Procédé selon la revendication 12, une nouvelle permutation aléatoire (PM) étant générée :

    lors d'un premier tour de l'algorithme cryptographique, et/ou à chaque tour de l'algorithme cryptographique, et/ou au dernier tour de l'algorithme cryptographique, et/ou avant chaque opération de l'algorithme cryptographique.

14. Circuit (CT1, CT2, CT3) comprenant un processeur (PRC) et configuré pour mettre en œuvre le procédé selon l'une des revendications 1 à 13.

**15.** Circuit selon la revendication 14, comprenant un circuit (OC, OC1) effectuant une opération de substitution, pour chaque table de substitution masquée (SBM[m]).

**16.** Circuit selon la revendication 15, comprenant un coprocesseur (CP1, CP2).

**17.** Dispositif comprenant un circuit selon les revendications 14 à 16, disposé sur un support (HD).

**18.** Produit-programme informatique pouvant être chargé dans une mémoire d'ordinateur et comprenant des parties de code qui, lorsqu'elles sont exécutées par un ordinateur, configurent l'ordinateur pour exécuter les étapes du procédé selon l'une des revendications 1 à 13.

Fig. 1

Fig. 2

Fig. 3

Fig. 4

S1 ⎯ X2[0..BX]

S2 ⎯ U[..] = RNP(0,MX)
KX=(MX+1)(BX+1)-1
PM[..] = RNP(0,KX)

## Fig. 5

S3 ⎯ k=0

S4 ⎯ m=INT(PM[k]/(BX+1))
b=PM[k]-m(BX+1)

P2[m,b] = X2[b]⊕U[m] ⎯ S5

S7
N
k > KX ? ◄ k += 1
Y
S6

Ret. PX2[0..MX,0..BX] ⎯ S8

X4

| X4[0] | X4[1] | ••• | X4[b] | ••• | X4[BX] |

OPk
⊕

| P3[0,0] | P3[0,1] | ••• | P3[0,b] | ••• | P3[0,BX] |
| P3[1,0] | P3[1,1] | ••• | P3[1,b] | ••• | P3[1,BX] |
| ⋮ | ⋮ | | ⋮ | | ⋮ |
| P3[m,0] | P3[m,1] | ••• | P3[m,b] | ••• | P3[m,BX] |
| ⋮ | ⋮ | | ⋮ | | ⋮ |
| P3[MX,0] | P3[MX,1] | ••• | P3[MX,b] | ••• | P3[MX,BX] |

PX3

PX5

| P5[0,0] | P5[0,1] | ••• | P5[0,b] | ••• | P5[0,BX] |
| P5[1,0] | P5[1,1] | ••• | P5[1,b] | ••• | P5[1,BX] |
| ⋮ | ⋮ | | ⋮ | | ⋮ |
| P5[m,0] | P5[m,1] | ••• | P5[m,b] | ••• | P5[m,BX] |
| ⋮ | ⋮ | | ⋮ | | ⋮ |
| P5[MX,0] | P5[MX,1] | ••• | P5[MX,b] | ••• | P5[MX,BX] |

## Fig. 6

Fig. 7

```
          ┌─────────────────────┐
   S11 ───│ PX3[0..MX,0..BX]    │
          │ X4[0..BX]           │
          └─────────────────────┘
                    │
          ┌─────────────────────┐
   S12 ───│ KX=(MX+1)(BX+1)-1   │
          │ PM[..] = RNP(0,KX)  │
          └─────────────────────┘
                    │
   S13 ───        ┌─────┐
                  │ k=0 │
                  └─────┘
                    │
   S14 ───┌───────────────────────┐
          │ m=INT(PM[k]/(BX+1))   │
          │ b=PM[k]-m(BX+1)       │
          └───────────────────────┘
                    │
          ┌───────────────────────┐
          │ P5[m,b] = P3[m,b]⊕X4[b]│
          └───────────────────────┘
                    │            S15
   S17      N
  <k > KX ?> ◄─── [ k += 1 ]
       │ Y                S16
  ┌──────────────────────┐
  │ Ret. PX5[0..MX,0..BX]│ ─── S18
  └──────────────────────┘
```

Fig. 8A

Fig. 8B

Fig. 8C

Fig. 9

Fig. 10

S41 — PX6[0..MX,0..BX]
SBM[0..MX,0..MX]

S42 — KX = (MX+1)(BX+1)-1
PM[..] = RNP(0,KX)

S43 — k=0

S44 — m = INT(PM[k]/(BX+1))
b = PM[k]-m(BX+1)

P7[m,b] = SBM[m,P6[m,b]]

S45

S47 — N

k > KX ? ◄ k += 1

Y

S46

Ret. PX7[0..MX,0..BX] — S48

## Fig. 11

Fig. 12

X6

| X0 | X4 | X8 | X12 |
|----|----|-----|-----|
| X1 | X5 | X9 | X13 |
| X2 | X6 | X10 | X14 |
| X3 | X7 | X11 | X15 |

XG6

MXC

| 2 | 3 | 1 | 1 |
|---|---|---|---|
| 1 | 2 | 3 | 1 |
| 1 | 1 | 2 | 3 |
| 3 | 1 | 1 | 2 |

MC

TR

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

# Fig. 13

PX4j[MX]

PX4j

| X0 | X4 | X8 | X12 |
|----|----|-----|-----|
| X1 | X5 | X9 | X13 |
| X2 | X6 | X10 | X14 |
| X3 | X7 | X11 | X15 |

PX4j[0]

XG6

MXC

| 2 | 3 | 1 | 1 |
|---|---|---|---|
| 1 | 2 | 3 | 1 |
| 1 | 1 | 2 | 3 |
| 3 | 1 | 1 | 2 |

MC

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

PX5j[0]

PX5j[MX]

# Fig. 14

PX5j

S51 — PX8[0..MX,0..BX]
W[0..MX]

S52 — KX = (MX+1)(BX+1)-1
PM[..] = RNP(0,KX)

S53 — k=0

Fig. 15

S54 — m = INT(PM[k]/(BX+1))
b = PM[k]-m(BX+1)

P9[m,b] = P8[m,b]⊕W[m]

S55

S57

N

k > KX ?   ←   k += 1

S56

Y

Ret. PX9[0..MX,0..BX]   S58

HD

CT3

IOC ↔ PRC ↔ M1  M2  M3

CP2  RGN

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 1651443
- US 2005259814 A
- EP 1601132 A
- US 2011055591 A

### Non-patent literature cited in the description

- *Advanced Encryption Standard FIPS PUB 197,* 26 November 2001
- Timing attacks on implementations of Diffie-Hellman, RSA, DSS, and other systems. **P. C. KOCHER.** Advances in Cryptology - CRYPTO '96, volume 1109 of Lecture Notes in Computer Science. Springer, 1996, vol. 1109, 104-113
- Differential Power Analysis. **P. C. KOCHER ; J. JAFFE ; B. JUN.** Advances in Cryptology - CRYPTO '99, volume 1666 of Lecture Notes in Computer Science. Springer, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004, volume 3156 of Lecture Notes in Computer Science. Springer, 2004, vol. 3156, 16-29
- ElectroMagnetic Analysis (EMA): Measures and Counter-measures for Smart Cards. **J.-J. QUIS-QUATER.** Smart Card Programming and Security. Springer, 2001, vol. 2140, 200-210
- Template Attacks. **S. CHARI ; J. R. RAO ; P. RO-HATGI.** CHES 2002. LNCS. Springer, 2003, vol. 2523, 172-186
- Mutual Information Analysis. **B. GIERLICHS ; L. BATINA ; P. TUYLS ; B. PRENEEL.** CHES 2008, volume 5154 of LNCS. Springer, 2008, vol. 5154, 426-442
- **DAESUNG KWON et al.** New Block Cipher: ARIA. *Information Security and Cryptology - ICISC 2003, Volume 2971 of the series Lecture Notes in Computer Science,* vol. 2971, 432-445